# EUROPÄISCHE PATENTSCHRIFT

(11) **EP 3 485 169 B1**
(45) Veröffentlichungstag und Bekanntmachung des Hinweises auf die Patenterteilung: **17.11.2021**
(21) Anmeldenummer: 17742947.9
(22) Anmeldetag: 10.07.2017
(51) Int. Cl.: F04D 1/00, A23C 3/037, F04D 29/58, F04D 29/62

(54) **VERFAHREN UND ANLAGE ZUR BEHANDLUNG HITZEEMPFINDLICHER FLÜSSIGER NAHRUNGSMITTELPRODUKTE UND ZENTRIFUGALPUMPE FÜR EINE SOLCHE ANLAGE**
METHOD AND INSTALLATION FOR THE TREATMENT OF HEAT-SENSITIVE LIQUID FOOD PRODUCTS, AND CENTRIFUGAL PUMP FOR AN INSTALLATION OF SAID TYPE
PROCÉDÉ ET INSTALLATION DE TRAITEMENT DE PRODUITS ALIMENTAIRES LIQUIDES SENSIBLES À LA CHALEUR ET POMPE CENTRIFUGE POUR UNE TELLE INSTALLATION

(30) Priorität: 14.07.2016 DE 102016008558
(43) Veröffentlichungstag der Anmeldung: 22.05.2019
(73) Patentinhaber: GEA TDS GmbH, 31157 Sarstedt (DE)
(72) Erfinder: ASSING, Hubert, 48683 Ahaus (DE); BUSS, Helmut, 46359 Heiden (DE); SCHWENZOW, Uwe, 48683 Ahaus (DE); STANGE, Roland, 48599 Gronau-Epe (DE); TACKE, Ludger, 46342 Velen (DE); ZIMMERMANN, Dietrich, 96103 Hallstadt (DE)
(74) Vertreter: Hauck Patentanwaltspartnerschaft mbB
(86) Internationale Anmeldenummer: PCT/EP2017/000812
(87) Internationale Veröffentlichungsnummer: WO 2018/010837

(56) Entgegenhaltungen:
- WO-A1-2016/012026
- US-A- 2 492 635
- US-A- 3 711 218
- US-A1- 2004 062 635

## Beschreibung

### TECHNISCHES GEBIET

Die Erfindung betrifft ein Verfahren und eine Anlage zur Behandlung hitzeempfindlicher flüssiger Nahrungsmittelprodukte wie Molkenproteinkonzentrate, Babynahrung, flüssige Babynahrungskonzentrate, nahrhafte Getränke oder Käsereimilch, bei dem Wasserdampf das flüssige Nahrungsmittelprodukt zur Bildung eines keimfreien Zustands in einem Infusorbehälter direkt erhitzt, bei dem dem flüssigen Nahrungsmittelprodukt durch Entspannung auf einen niedrigeren Druck Wasser in einer Menge, die jener des zuvor zugeführten Wasserdampfes entspricht, entzogen wird und bei dem das flüssige Nahrungsmittelprodukt zwischen der Erhitzung und der Entspannung eine Förderung mittels einer als Zentrifugalpumpe ausgebildeten ersten Fördereinrichtung erfährt. Weiterhin betrifft die Erfindung eine Zentrifugalpumpe für eine solche Anlage.

Hitzeempfindliche flüssige Nahrungsmittelprodukte der vorgenannten Art enthalten relativ viel Proteine, viel Trockenmasse und wenig Wasser, und sie können eine niedrige, mittlere oder hohe Viskosität besitzen. Der Begriff der Hitzeempfindlichkeit soll im Folgenden so verstanden werden, dass diese Nahrungsmittelprodukte, vorzugsweise bei Temperaturen über 100 °C, zum Anbrennen, d.h. unter diesen Bedingungen zur Belagbildung an den Wandungen des Infusorbehälters und der sie fördernden Zentrifugalpumpe neigen. Diese Belagbildung wird auch als Produkt-Fouling bezeichnet. Das Produkt-Fouling verringert die Standzeit bzw. die Betriebszeit des Infusorbehälters und insbesondere der Zentrifugalpumpe zwischen zwei Reinigungszyklen.

### STAND DER TECHNIK

Besonders kritische Bereiche der Anlage zur Durchführung des Verfahrens sind der Bodenbereich des Infusorbehälters, der sich nach unten bis in eine Auslassöffnung verjüngt, und eine Fördereinrichtung, die in einer Verbindungsleitung zwischen der Auslassöffnung des Infusorbehälters und einer der Entspannung des erhitzten flüssigen Nahrungsmittelprodukts dienenden Vakuumkammer angeordnet ist. Bei der Fördereinrichtung kann es sich um eine Verdrängerpumpe, beispielsweise eine Zahnradpumpe, oder auch um eine Zentrifugalpumpe handeln. Die Fördereinrichtung ist in einem Abstand vom Infusorbehälter oder unmittelbar an dessen Auslassöffnung angeordnet. Eine Ansammlung von erhitztem flüssigem Nahrungsmittelprodukt im Bodenbereich des Infusorbehälters und in der sich anschließenden Verbindungsleitung bis zur Fördereinrichtung führt dort zu einer unerwünschten und undefinierten Verweilzeit. Ein Sumpf an erhitztem flüssigem Nahrungsmittelprodukt muss insbesondere im Infusorbehälter vermieden werden. Daher hat es nicht an Vorschlägen gefehlt, diesen Mangel abzustellen

Es ist bei Erhitzungsanlagen mit einem Infusorbehälter bekannt, die Abförderung des direkt erhitzten flüssigen Nahrungsmittelprodukts aus dem Infusorbehälter mit einer rotierenden Verdrängerpumpe, beispielsweise einer Zahnradpumpe, durchzuführen, wobei deren Gehäuse eine Kühlung aufweist und das Gehäuse sich unmittelbar an die Auslassöffnung des Infusorbehälters anschließt (EP 0 784 706 B1). Eine Zahnradpumpe besitzt, bauartbedingt, eine Selbstreinigungsfähigkeit, weil die Zahnräder eng miteinander kämmen und an den zugeordneten Gehäusewandungen entlangschaben und somit eine stetig aufwachsende Belagbildung (Produkt-Fouling) verhindern.

Die WO 2011/101077 A1**,** die die Priorität der DE 10 2010 008 448 A1 in Anspruch nimmt, offenbart eine UHT-Anlage zur Behandlung hitzeempfindlicher flüssiger Nahrungsmittelprodukte, in der unter Anderem unterstromig eines Infusorbehälters in einer Verbindungsleitung zu einer Vakuumkammer eine erste Fördereinrichtung angeordnet ist, die als Verdrängerpumpe ausgebildet ist. Der Infusorbehälter verfügt in seinem unterem Bereich, einem sich bis zu einer Auslassöffnung verjüngenden Bodenteil, über eine Kühlung dieses Bodenteils. Die Verdrängerpumpe kann dabei in einem nicht quantifizierten Abstand zu der Austrittsöffnung aus dem Infusorbehälter angeordnet sein oder diese Austrittsöffnung mündet im Grenzfall unmittelbar in die Verdrängerpumpe ein. Bei der Verdrängerpumpe wird vorzugsweise eine rotierende eingesetzt, die beispielsweise, wie vorstehend erwähnt, als Zahnrad- oder auch als Flügelzellen-, Schraubenrad-, Impeller- oder Drehkolbenpumpe ausgebildet sein kann. Oszillierend arbeitende Verdrängerpumpen sind grundsätzlich ebenfalls einsetzbar, wenn die durch den oszillatorischen Betrieb bedingten Volumenstromschwankungen durch geeignete Mittel ausgeglichen werden oder im Behandlungsprozess keine Rolle spielen.

In der WO 2016/012026 A1 ist die aus der EP 0 794 706 B1 bekannte Anlage zur Wärmebehandlung hitzeempfindlicher flüssiger Nahrungsmittel dahingehend abgewandelt, dass sich nunmehr, bei ansonsten unveränderter Konfiguration der einzelnen Aggregate der Anlage, der den Boden des Infusorbehälters umgebende Kühlmantel, der der Kühlung des Bodens dient, bis hinunter an die Pumpe und, gemäß einer vorteilhaften Ausführungsform, in das Pumpengehäuse hinein erstreckt. Bei der Pumpe handelt es sich um eine Verdrängerpumpe, vorzugsweise um eine Zahnrad- oder Kolbenpumpe. Es wird aber auch eine Zentrifugalpumpe beansprucht, ohne dass angegeben ist, wie diese Zentrifugalpumpe konkret konstruktiv ausgestaltet ist. Es kann daher davon ausgegangen werden, dass hier eine dem Fachmann in ihrem grundsätzlichen Aufbau bekannte, herkömmliche und hydraulisch optimierte Zentrifugalpumpe vorgesehen ist.

In der WO 2010/086082 A1**,** die die Priorität der DE 10 2009 006 248 A1 in Anspruch nimmt, ist ein Infusionssystem für ein zu erwärmendes flüssiges Lebensmittelprodukt beschrieben, bei dem eine Infusionskammer einen unteren Bodenteil mit einer Kühlung aufweist. Die Infusionskammer findet ihre Fortsetzung in einem sich an eine Auslassöffnung im unteren Bodenteil anschließenden, ebenfalls eine Kühlung aufweisenden Auslassrohr. Es bleibt offen, ob das Auslassrohr unmittelbar oder mittelbar über eine Verbindungsleitung in eine wie auch immer ausgestaltete Fördereinrichtung einmündet.

Eine Zentrifugalpumpe für unproblematische flüssige Nahrungsmittelprodukte, wie beispielsweise Wasser, ist in ihrem grundsätzlichen Aufbau hinlänglich bekannt. Sie ist derart ausgestaltet und ausgelegt, dass sie einen möglichst hohen hydraulischen Wirkungsgrad aufweist, d.h. dass sie mit einer bestimmten Antriebsenergie ein möglichst großes Produkt aus Volumenstrom und Förderhöhe erreicht. In einem in der Regel aus mindestens zwei Gehäuseteilen bestehenden Pumpengehäuse ist auf einer Welle ein Laufrad mit Schaufeln angeordnet. Innerhalb des Pumpengehäuses schließt sich an einen ringförmig umlaufenden Laufradaustrittsquerschnitt außenseits ein Leitapparat in Form beispielsweise eines Spiralgehäuses oder eines schaufellose Ringraums an. An dem saugseitigen Gehäuseteil, einem Gehäusedeckel, befindet sich koaxial zur Laufradachse ein Einlass, ausgebildet in der Regel als sogenannter Saugstutzen, und, umfangsseits tangential ausmündend, ein Auslass, der in der Regel als sogenannter Druckstutzen ausgebildet ist. Mit dem der Saugseite abgewandten Gehäuseteil, der Gehäuserückwand, bildet die Laufradrückseite einen sog. hinteren Radseitenraum, der mit Blick auf einen guten hydraulischen Wirkungsgrad der Zentrifugalpumpe in der Regel eine geringe axiale Erstreckung aufweist. Diese axiale oder spaltweite Erstreckung ist gerade so eng bemessen, dass bei angemessenen Fertigungstoleranzen die mechanische Funktionsfähigkeit der Zentrifugalpumpe sichergestellt ist. In gleicher Weise ist eine Laufradvorderseite, und hier sind es bei einem sogenannten offenen Laufrad die vorderen, stirnseitigen freien Schaufelkanten, mit möglichst engem Spalt an den Verlauf des Gehäusedeckels angepasst. Zur Reduzierung einer Axialkraft, die aus den auf das Laufrad beiderseits wirkenden Druckkräften resultiert, sind im Nabenbereich des Laufrades und über dessen Umfang verteilt in der Laufradrückseite in der Regel mehrere, im Durchmesser relativ kleine Druckausgleichsbohrungen angeordnet.

Bei hitzeempfindlichen flüssigen Nahrungsmittelprodukten der einleitend genannten Art kommt es vorrangig darauf an, dass bei deren Förderung durch eine Zentrifugalpumpe eine möglichst geringe Neigung zu Ablagerungen an den Wandungen der Zentrifugalpumpe besteht. Es hat sich beispielsweise bei der direkten Erhitzung von sehr hitzeempfindlichen flüssigen Nahrungsmittelprodukten in einem Infusorbehälter und anschließender Abförderung des erhitzten flüssigen Nahrungsmittelproduktes aus dem Infusorbehälter mittels einer nachgeschalteten Zentrifugalpumpe üblicher Bauart, d.h. hydraulisch optimierter Bauart, gezeigt, dass sich diese Zentrifugalpumpe in kürzester Zeit, wobei es sich diesbezüglich um Sekunden bis wenige Minuten handelt, durch Produkt-Fouling zugesetzt und damit außer Betrieb gesetzt hat. Besonders kritische Bereiche sind hier der Saugbereich des Laufrades, weil hier nicht gelöste Gase und insbesondere nicht kondensierter Wasserdampf das Produkt-Fouling verstärken können, und der enge spaltweite hintere Radseitenraum.

Für die konkrete Ausgestaltung einer Zentrifugalpumpe in einer Anlage zur Behandlung hitzeempfindlicher flüssiger Nahrungsmittelprodukte, in der letzteres eine Direkterhitzung mittels kulinarischem Wasserdampf erfährt, ist bislang noch keine befriedigende Lösung mit Blick auf eine hinreichend lange Standzeit der Zentrifugalpumpe bekannt.

Es ist Aufgabe der vorliegenden Erfindung, ein Verfahren der gattungsgemäßen Art, eine Anlage zur Durchführung des Verfahrens sowie eine Zentrifugalpumpe für diese Anlage zu schaffen, die bei der Behandlung von hitzeempfindlichen flüssigen Nahrungsmittelprodukten der eingangs genannten Art die Neigung zu Produkt-Fouling im Infusorbehälter und von dort bis in die Zentrifugalpumpe hinein vermindern, wobei insbesondere die Zentrifugalpumpe gegenüber einer hydraulisch optimierten Zentrifugalpumpen nach dem Stand der Technik eine deutlich verlängerte Standzeit aufweist. Eine weitere Aufgabe besteht darin, eine vorzugsweise handelsübliche Zentrifugalpumpe so zu modifizieren, dass diese das Wachstum von Produkt-Fouling in ihren kritischen Bereichen hemmt und so die gewünschte Standzeitverlängerung erreicht wird.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des erfindungsgemäßen Verfahrens sind Gegenstand der zugeordneten Unteransprüche. Eine Anlage zur Durchführung des Verfahrens ist Gegenstand des nebengeordneten Anspruchs 10. Vorteilhafte Ausführungsformen der erfindungsgemäßen Anlage sind in den zugeordneten Unteransprüchen beschrieben. Eine Zentrifugalpumpe für eine Anlage nach Anspruch 10 ist Gegenstand des Anspruchs 17. Vorteilhafte Ausführungsformen der erfindungsgemäßen Zentrifugalpumpe sind Gegenstand der zugeordneten Unteransprüche.

Die Erfindung geht verfahrenstechnisch aus von einem Verfahren zur Behandlung hitzeempfindlicher flüssiger Nahrungsmittelprodukte, wie Molkenproteinkonzentrate, Babynahrung, flüssige Babynahrungskonzentrate, nahrhafte Getränke oder Käsereimilch, bei dem Wasserdampf das flüssige Nahrungsmittelprodukt zur Bildung eines keimfreien Zustands in einem Infusorbehälter direkt erhitzt, bei dem dem flüssigen Nahrungsmittelprodukt durch Entspannung auf einen niedrigeren Druck Wasser in einer Menge, die jener des zuvor zugeführten Wasserdampfes entspricht, entzogen wird, bei dem das flüssige Nahrungsmittelprodukt zwischen der Erhitzung und der Entspannung eine Förderung mittels einer als Zentrifugalpumpe ausgebildeten ersten Fördereinrichtung erfährt.

Die der Erfindung zugrundeliegende Aufgabe wird gelöst, wenn bei dem Verfahren der gattungsgemäßen Art nach der direkten Erhitzung folgende Behandlungsschritte (a) bis (d) vorgesehen sind:
das flüssige Nahrungsmittelprodukt
(a) erfährt eine an sich bekannte erste Kühlung wenigstens am Behälterboden des Infusorbehälters bis in eine dortige Auslassöffnung hinein;
(b) erfährt eine zweite Kühlung in einem sich an die Auslassöffnung unmittelbar anschließenden rohrförmigen Abschnitt, der entweder durch ein aus dem Infusorbehälter ausmündendes Auslassrohr oder durch einen Saugstutzen der Zentrifugalpumpe gebildet ist;
(c) erfährt eine dritte Kühlung in einem Gehäusedeckel eines Pumpengehäuses der Zentrifugalpumpe, der sich unmittelbar an das Auslassrohr oder den Saugstutzen anschließt;
(d) dient mit einem Teil seines in einem Laufrad der Zentrifugalpumpe geförderten Volumenstroms, das zu dem Gehäusedeckel der Zentrifugalpumpe hin offen ausgebildet ist, wenigstens einer planmäßigen Spülung des Pumpengehäuses und des Laufrades über einen hinteren Laufradspalt, der zwischen einer Gehäuserückwand der Zentrifugalpumpe und dem Laufrad vorgesehen ist, und über einen vorderen Laufradspalt, der zwischen dem Gehäusedeckel und dem Laufrad vorgesehen ist, wobei die Volumenströme der planmäßigen Spülungen die zwangsläufigen Ausgleichsströmungen innerhalb des Pumpengehäuses, die sich aus einer hydraulisch optimierten Auslegung der Zentrifugalpumpe mit einem jeweils minimalen hinteren und vorderen Laufradspalt, die die mechanische Funktionsfähigkeit der Zentrifugalpumpe sicherstellen, ergeben, bis zu einem Mehrfachen übersteigen.

Beim Schritt (d) handelt es sich um einen wesentlichen erfinderischen Lösungsgedanken. Die Schritte (a) bis (c) stellen sicher, dass ein weiterer erfinderischer Grundgedanke, nämliche die lückenlose Kühlung des im Bodenbereich des Infusorbehälters anfallenden und bis zum Druckstutzen der Zentrifugalpumpe geförderten erhitzten flüssigen Nahrungsmittelprodukts, einer konkreten Lösung zugeführt wird.

Zur Intensivierung der Kühlung sieht eine Ausgestaltung des Verfahrens vor, dass das flüssige Nahrungsmittelprodukt eine vierte Kühlung in der Gehäuserückwand des Pumpengehäuses erfährt.

Eine erste und eine zweite Spülung des Pumpengehäuses und des Laufrades sind gemäß einer vorteilhaften Ausgestaltung des Verfahrens jeweils durch Rezirkulation über das Laufrad, getrieben jeweils durch Druckunterschiede im Pumpengehäuse, generiert. Dabei erfolgt die erste Spülung über den hinteren Laufradspalt zwischen dem Laufrad und der Gehäuserückwand, wobei die erste Spülung in die Strömung durch das Laufrad eingreift. Die zweite Spülung erfolgt über den vorderen Laufradspalt zwischen dem Gehäusedeckel und dem Laufrad, wobei die zweite Spülung ebenfalls in die Strömung durch das Laufrad eingreift. Weiterhin erfolgt eine dritte Spülung durch Ausgleichsströmungen zwischen einer jeweiligen Druck-und Saugseite einer Schaufel des offenen Laufrades und über den vorderen Laufradspalt, wobei die Maßnahmen, die die zweite Spülung generieren, die dritte Spülung zwangsläufig zur Folge haben.

Die lückenlose Kühlung des erhitzten flüssigen Nahrungsmittelprodukts wird erreicht, wie dies ein diesbezüglicher erster Vorschlag vorsieht, wenn die Kühlungen jeweils getrennt voneinander betrieben werden. Ein zweiter Vorschlag, der den diesbezüglichen kühltechnischen Aufwand reduziert, sieht hinsichtlich der Kühlung vor, dass wenigstens zwei Kühlungen in Reihe geschaltet sind. In beiden Fällen werden zur Optimierung der Kälteübertragungsleistung, wie dies ein dritter Vorschlag vorsieht, die Kühlungen im Gegenstrom zum erhitzten flüssigen Nahrungsmittelprodukt betrieben.

Eine erfindungsgemäße Anlage zur Durchführung des erfindungsgemäßen Verfahrens weist die Kombination folgender, teilweise an sich bekannter Merkmale auf:
- einen Infusorbehälter, in dem Wasserdampf das flüssige Nahrungsmittelprodukt zur Bildung eines keimfreien Zustands direkt erhitzt;
- eine mit dem Infusorbehälter über eine Verbindungsleitung in fluidgängiger Verbindung stehende Vakuumkammer, in der dem erhitzen flüssigen Nahrungsmittelprodukt durch Entspannung auf einen niedrigeren Druck Wasser in einer Menge, die jener des zuvor zugeführten Wasserdampfes entspricht, entzogen wird;
- eine in der Verbindungsleitung angeordnete, als Zentrifugalpumpe ausgebildete erste Fördereinrichtung zur Förderung des erhitzten flüssigen Nahrungsmittelprodukts von dem Infusorbehälter zu der Vakuumkammer;
- eine in einem Behälterboden des Infusorbehälters angeordnete Auslassöffnung zur Abfuhr des erhitzten flüssigen Nahrungsmittelprodukts;
- einen sich an die Auslassöffnung anschließenden rohrförmigen Abschnitt zur Weiterleitung des erhitzten flüssigen Nahrungsmittelprodukts, der entweder durch ein aus dem Infusorbehälter ausmündendes Auslassrohr oder durch einen Saugstutzen der Zentrifugalpumpe gebildet ist;
- einen behälterbodenseitigen Kühlmittelraum zur Kühlung des den Behälterboden beaufschlagenden erhitzten flüssigen Nahrungsmittelprodukts;
- einen auslassrohrseitigen Kühlmittelraum oder einen saugstutzenseitigen Kühlmittelraum zur Kühlung des den rohrförmigen Abschnitt durchströmenden erhitzten flüssigen Nahrungsmittelprodukts;
- ein Pumpengehäuse der Zentrifugalpumpe, das wenigstens aus einem Gehäusedeckel und einer Gehäuserückwand gebildet ist und einen gehäusedeckelseitigen Kühlmittelraum zur Kühlung des geförderten erhitzten flüssigen Nahrungsmittelprodukts aufweist;
- die Zentrifugalpumpe, die ein zu dem Gehäusedeckel hin offenes Laufrad aufweist und die so ausgelegt ist, dass mit einem Teil des in dem Laufrad geförderten Volumenstroms des erhitzen flüssigen Nahrungsmittelprodukts wenigstens eine planmäßige Spülung des Pumpengehäuses und des Laufrades über einen hinteren Laufradspalt, der zwischen der Gehäuserückwand und dem Laufrad vorgesehen ist, und über einen vorderen Laufradspalt, der zwischen dem Gehäusedeckel und dem Laufrad vorgesehen ist, erfolgt, und wobei die Volumenströme der planmäßigen Spülungen die zwangsläufigen Ausgleichsströmungen innerhalb des Pumpengehäuses, die sich aus einer hydraulisch optimierten Auslegung der Zentrifugalpumpe mit einem jeweils minimalen hinteren und vorderen Laufradspalt, die die mechanische Funktionsfähigkeit der Zentrifugalpumpe sicherstellen, ergeben, bis zu einem Mehrfachen übersteigen.

Der letztgenannte Merkmalskomplex stellt neben den Merkmalen zur Kühlung einen wesentlichen Aspekt der erfindungsgemäßen Anlage dar.

Zur Intensivierung der Kühlung sieht eine weitere Ausführungsform vor, dass das Pumpengehäuse einen gehäuserückwandseitigen Kühlmittelraum aufweist.

Zur Realisierung einer ersten Spülung wird vorgeschlagen, dass diese über den hinteren Laufradspalt zwischen dem Laufrad und der Gehäuserückwand auf dem Weg über wenigsten eine in der Laufradrückseite angeordnete Spülbohrung erfolgt. Hinsichtlich einer zweiten Spülung sieht ein weiterer Vorschlag vor, dass diese über den vorderen Laufradspalt zwischen dem Gehäusedeckel und dem Laufrad erfolgt. Weiterhin erfolgt eine dritte Spülung durch Ausgleichsströmungen zwischen einer jeweiligen Druck- und Saugseite einer Schaufel des offenen Laufrades und über den vorderen Laufradspalt, wobei die Maßnahmen, die die zweite Spülung generieren, die dritte Spülung zwangsläufig zur Folge haben.

Die lückenlose Kühlung des erhitzten flüssigen Nahrungsmittelprodukts wird erreicht, wie dies ein diesbezüglicher erster Vorschlag vorsieht, wenn der behälterbodenseitige Kühlmittelraum, der auslassrohrseitige oder der saugstutzenseitige Kühlmittelraum, der gehäusedeckelseitige Kühlmittelraum und der gehäuserückwandseitige Kühlmittelraum getrennt voneinander mit Kühlmittel beaufschlagt werden. Ein zweiter Vorschlag, der den kühltechnischen Aufwand reduziert, sieht hinsichtlich der Kühlung vor, dass wenigstens zwei Kühlmittelräume miteinander in Reihe geschaltet sind.

Eine erfindungsgemäße Zentrifugalpumpe, die für eine Anlage zur Behandlung hitzeempfindlicher flüssiger Nahrungsmittelprodukte geeignet ist, geht aus von einer an sich bekannten Zentrifugalpumpe mit einem Einlass, einem Auslass, einem Pumpengehäuse, welches von wenigstens einem Gehäusedeckel und einer Gehäuserückwand gebildet ist, einer im Pumpengehäuse ausgebildeten und in fluidgängiger Verbindung mit dem Einlass und dem Auslass stehenden Pumpenkammer und einem in der Pumpenkammer drehbar aufgenommenen Laufrad mit Schaufeln. Zwischen zwei benachbarten Schaufeln ist jeweils ein Schaufelkanal ausgebildet, der zum Gehäusedeckel hin offen und zur Gehäuserückwand hin durch eine Laufradrückseite geschlossen ausgebildet ist. Zwischen der Gehäuserückwand und dem Laufrad ist ein hinterer Laufradspalt und zwischen dem Gehäusedeckel und dem Laufrad ist ein vorderer Laufradspalt vorgesehen.

Der erfinderische Grundgedanke besteht darin, das Laufrad selbst und seine angrenzenden kritischen Bereiche bis zur unmittelbaren pumpengehäuseseitigen Berandung der Laufradvorderseite und der Laufradrückseite mit dem zu fördernden flüssigen Nahrungsmittelprodukt zu spülen und dort damit ein Produkt-Fouling zu hemmen, wobei ein weiterer erfinderischer Grundgedanke darin besteht, im Zuge der erfindungsgemäßen Spülung gleichzeitig wenigstens pumpengehäuseseitige Berandungen im Bereich des Gehäusedeckels zu kühlen.

Das flüssige Nahrungsmittelprodukt dient somit mit einem Teil seines in dem Laufrad geförderten Volumenstroms planmäßigen Spülungen des Pumpengehäuses und des Laufrades selbst. Dabei übersteigen die Volumenströme der planmäßigen Spülungen die zwangsläufigen Ausgleichsströmungen im Pumpengehäuse, die sich aus einer fachnotorischen hydraulisch optimierten Auslegung der Zentrifugalpumpe ergeben, bis zu einem Mehrfachen. Dieser Auslegungsbereich ist vom Fachmann nicht als eine nach oben offene Bereichsangabe zu verstehen, sondern wird im konkreten Anwendungsfall so ausgelegt, das eine geforderte Standzeit der Zentrifugalpumpe unter Sicherstellung der geforderten Durchsatzleistung der Anlage und damit der Zentrifugalpumpe unter wirtschaftlichen Kriterien erreicht wird. Das Verhältnis der planmäßigen Volumenströme, resultierend aus den erfindungsgemäßen Maßnahmen, zu den Volumenströmen der zwangsläufigen Ausgleichsströmungen, bedingt durch die fachnotorisch hydraulisch optimierte Auslegung, liegt bei der konkreten Realisierung und in Abhängigkeit vom Anwendungsfall zwischen 1,5 bis 10, vorzugweise zwischen 2 bis 5. Durch die Kühlung wird die Neigung zum Anbrand von flüssigem Nahrungsmittelprodukt an den Wandungen der Zentrifugalpumpe verringert. Dies geschieht unter einem planmäßigen Verzicht auf einen optimalen hydraulischen Wirkungsgrad. In der erfindungsgemäßen Zentrifugalpumpe wird im Laufrad ein Volumenstrom gefördert, der um die Summe aller quasi rezirkulierenden Spülvolumenströme gegenüber dem über den Saugstutzen angesaugten Volumenstrom vergrößert ist. Die Spülvolumenströme führen Volumina aus dem Kern der Schaufelkanäle an die gekühlten Wandungen des Gehäuses und von dort wieder in das Laufrad hinein, wobei der Kühleingriff nicht kondensierten Wasserdampf kondensieren lässt und somit die Neigung zum Produkt-Fouling vermindert wird.

Die vorstehend dargelegten Zusammenhänge zeigen auf, dass eine erfindungsgemäß mit dem von ihr geförderten flüssigen Nahrungsmittelprodukt gespülte Zentrifugalpumpe ein Laufrad besitzt, dessen hydraulische Förderleistung, bezogen auf das Laufrad, höher sein muss als die sich am Druckstutzen im Endergebnis tatsächlich einstellende hydraulische Förderleistung der Zentrifugalpumpe. Wenn zur Realisierung einer gespülten Zentrifugalpumpe der in Rede stehenden Art eine hydraulisch optimierte Zentrifugalpumpe gewählt wird, dann muss deren Nennförderleistung um die vorstehend erwähnte Förderleistungsdifferenz entsprechend höher gewählt werden. Bei gleicher Nennförderleistung wird ein äußerer Laufraddurchmesser der gespülten Zentrifugalpumpe daher größer sein müssen als ein solcher für eine hydraulisch optimierte Zentrifugalpumpe.

Die konkrete Lösung zur Umsetzung der vorstehend genannten erfinderischen Grundgedanken besteht darin, dass der hintere und/oder der vordere Laufradspalt, die zwangsläufig jeweils zwischen Laufrad und Pumpengehäuse gegeben sein müssen, gegenüber jeweils einem diesbezüglichen minimalen vorderen und hinteren Laufradspalt, der die mechanische Funktionsfähigkeit der Zentrifugalpumpe sicherstellt, durch Reduzierung der Breite des Laufrades im Bereich des vorderen und des hinteren Laufradspaltes bis zu einem Mehrfachen vergrößert sind/ist. Durch die Vergrößerung dieser Laufradspalte wird die Generierung der erwünschten und notwendigen Spülströmungen erst ermöglicht. Die jeweilige Weite des vorderen und des hinteren Laufradspaltes kann in Abhängigkeit von den spezifischen Eigenschaften des flüssigen Nahrungsmittelprodukts bemessen werden.

Zur Intensivierung der Kühlung sieht eine weitere Ausführungsform vor, auch die Gehäuserückwand mit einem von einem Kühlmittel durchströmbaren Kühlmittelraum zu versehen.

Eine lückenlose Kühlung des Pumpengehäuses wird sichergestellt, wenn, wie dies auch vorgeschlagen wird, zusätzlich zu dem gehäusedeckelseitigen Kühlmittelraum und dem gehäuserückwandseitigen Kühlmittelraum der Einlass der Zentrifugalpumpe in Form eines am Gehäusedeckel vorspringenden Saugstutzens ausgebildet ist, der mit einem saugstutzenseitigen Kühlmittelraum versehen ist. Eine derartige Ausführung ist mit Blick auf die erfindungsgemäße Zentrifugalpumpe nicht zwingend. Sie ist, ebenso wie eine Zentrifugalpumpe, bei der auf die Ausbildung eines Saugstutzens verzichtet wird, geeignet für eine unmittelbare Verbindung zwischen dem Saugstutzen der Zentrifugalpumpe und einem in seinem Bodenteil mit einem Kühlmittelraum versehenen Infusorbehälter, wobei sich dieser Kühlmittelraum bis hinunter zu einer aus dem Bodenteil ausmündenden Auslassöffnung erstreckt, die dann das finale Ende des Infusorbehälters darstellt. Der Saugstutzen kann dann in dieser Anordnung die Funktion eines rohrförmigen Abschnitts erfüllen, der sich an die finale Auslassöffnung des Infusorbehälters anschließt. Es ist auch eine Anordnung mit der erfindungsgemäßen Zentrifugalpumpe möglich, bei der die Auslassöffnung als finales Ende des Infusorbehälters unmittelbar an dem Gehäusedeckel der Zentrifugalpumpe angeordnet ist, wobei dort auf die Ausbildung eines Saugstutzens verzichtet wird.

In allen Ausführungen, nämlich bei einer erfindungsgemäßen Zentrifugalpumpe mit oder ohne Saugstutzen in Kombination mit einem Infusorbehälter, bei dem die Auslassöffnung oder ein sich an diese anschließender rohrförmiger Abschnitt das finale Ende darstellt, ist eine Ansammlung von erhitztem flüssigem Nahrungsmittelprodukt im Bodenteil des Infusorbehälters und in den sich ggf. anschließenden Bereichen bis zum Eintritt in die Zentrifugalpumpe unerwünscht, da eine solche Ansammlung zu einer unerwünschten und undefinierten Verweilzeit führt, die verhindert werden soll. Die erfindungsgemäße Zentrifugalpumpe hat in einer Verbindung mit einem Infusorbehälter die Aufgabe, in letzterem anfallendes erhitztes flüssiges Nahrungsmittelprodukt aus diesem unverzüglich und vollständig abzuführen, ohne dabei, auch bei stoßweisem Anfall, zu verstopfen.

Zur Intensivierung der Spülung wird weiterhin vorgeschlagen, dass jeder Schaufelkanal zwischen zwei benachbarten Schaufeln des Laufrades im Bereich seiner begrenzenden Laufradrückseite über wenigstens eine die Laufradrückseite durchdringende Spülbohrung mit dem hinteren Laufradspalt in fluidgängiger Verbindung steht. Hierdurch lässt sich die radiale Eingriffstiefe der zugeordneten Spülströmung festlegen. Bei der Spülbohrung handelt es sich im allgemeinsten Falle um Durchtrittsöffnungen beliebiger Form, d.h. eine einfach herzustellende Kreisform ist nicht zwingend.

Es hat sich hinsichtlich der Positionierung der Spülbohrung innerhalb des Schaufelkanals als vorteilhaft erwiesen, wenn der geometrische Ort für die jeweilige Durchdringungsstelle der Spülbohrung mit der Laufradrückseite, der auch einen Lochkreisdurchmesser festlegt, folgendermaßen bestimmt ist:
- näherungsweise durch die Mitte des Schaufelkanals, bezogen auf den Abstand der Schaufeln an der Durchdringungsstelle, und
- näherungsweise durch die Mitte einer maximalen Stromfadenlänge des Schaufelkanals zwischen dessen Ein- und Austritt.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens der gattungsgemäßen Art, den verschiedensten Ausführungsformen einer Anlage zur Durchführung des Verfahrens und den verschiedensten Ausführungsformen einer Zentrifugalpumpe für eine solche Anlage realisiert ist, wird nachfolgend anhand der Zeichnung ein bevorzugtes Ausführungsbeispiel einer erfindungsgemäßen Zentrifugalpumpe, die in ihrem Pumpengehäuse ein erfindungsgemäßes Laufrad aufnimmt und die mit einer Auslassöffnung eines Infusorbehälters in fluidgängiger Verbindung steht, beschrieben. Es zeigen
- **Figur 1**: in schematischer Darstellung eine Anlage zur Behandlung hitzeempfindlicher flüssiger Nahrungsmittelprodukte nach dem Stand der Technik;
- **Figur 2**: in schematischer Darstellung einen Infusorbehälter zur direkten Erhitzung eines flüssigen Nahrungsmittelproduktes in einer unmittelbaren Verbindung mit einer rotierenden Verdrängerpumpe, wobei die Anordnung aus dem Stand der Technik bekannt ist;
- **Figur 3**: eine Ansicht der Zentrifugalpumpe in senkrechter Richtung sowohl auf ihre Rotationsachse als auch auf die Längsachse ihres Druckstutzens, wobei die Rotationsachse in Richtung der Schwerkraft orientiert ist und die Zentrifugalpumpe an einer Auslauföffnung eines Infusorbehälters unmittelbar angeordnet ist;
- **Figur 4**: eine Vorderansicht des Laufrades der Zentrifugalpumpe gemäß **Figur 3** mit der näherungsweisen Andeutung einer ersten und einer dritten Spülströmung S1, S3 und
- **Figur 5**: in der Seitenansicht einen Meridianschnitt durch das Laufrad gemäß **Figur 4** entsprechend einem dort mit **A-A** gekennzeichneten Schnittverlauf mit der näherungsweisen Andeutung der ersten und einer zweiten Spülströmung S1, S2.

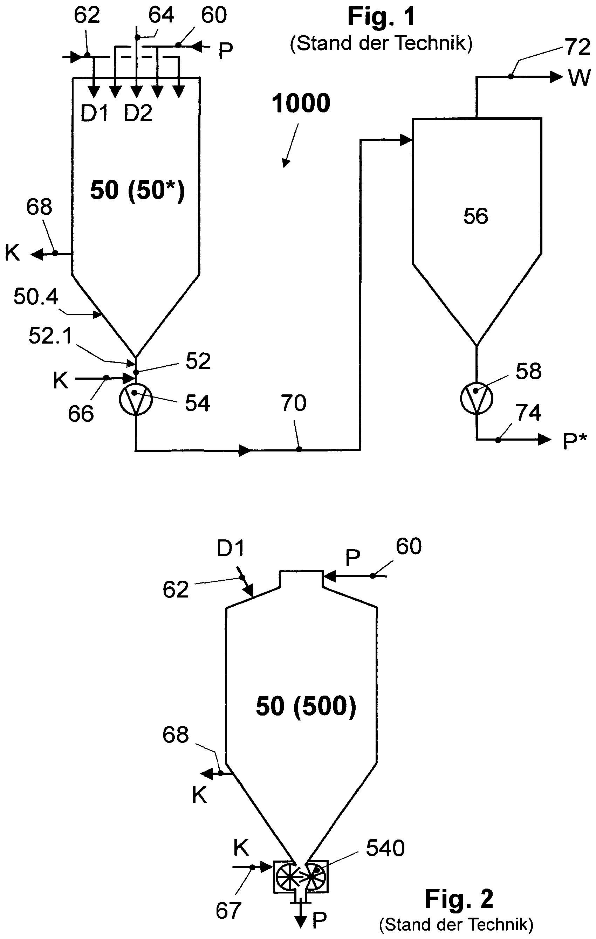

Eine aus dem Stand der Technik bekannte Anlage 1000 gemäß **Figur 1** (beispielsweise WO 2011/101077 A1) enthält einen Infusionsbehälter 50, der als bekannter Infusionsbehälter erster Art 50* (beispielsweise WO 2010/086082 A1) in seinem Kopfraum einen Produkt-Einlass 60 aufweist, über den ein flüssiges Nahrungsmittelprodukt P, das hitzebehandelt werden soll, diesem Infusionsbehälter erster Art 50* zentral und kreisringförmig zugeführt wird. Dem zugeführten flüssigen Nahrungsmittelprodukt P wird zur Direkterhitzung über einen äußeren Wasserdampf-Einlass 62 radial außenseits ein erster Wasserdampf D1 und über einen inneren Wasserdampf-Einlass 64 ein zweiter Wasserdampf D2 radial von innen zugeführt. Der Infusorbehälter erster Art 50* erfährt über einen infusorseitigen Kühlmittel-Eintritt 66 eine Zuführung von Kühlmittel zu einem behälterbodenseitigen Kühlmittelraum 50.4 zur Kühlung K eines Bodens der Infusionskammer erster Art 50*. Die Abführung des Kühlmittels erfolgt über einen infusorseitigen Kühlmittel-Austritt 68.

Eine Auslassöffnung des Infusorbehälters erster Art 50* ist über ein Auslassrohr 52, das von einem auslassrohrseitigen Kühlmittelraum 52.1 umgeben ist, mit einer ersten Fördereinrichtung 54 verbunden, die als Verdrängerpumpe, vorzugsweise als rotierende, ausgebildet und in einer von der ersten Fördereinrichtung 54 zu einem Eintritt einer Vakuumkammer 56 führenden Verbindungsleitung 70 angeordnet ist. Die erste Fördereinrichtung 54 fördert das erhitzte flüssige Nahrungsmittelprodukt P von dem Infusionsbehälter erster Art 50* zur Vakuumkammer 56. Die Vakuumkammer 56 ist dazu ausgebildet, um dem sich durch die Druckabsenkung abkühlenden erhitzten flüssigen Nahrungsmittelprodukt P jene Menge Wasser W als sog. Brüdendampf zu entziehen, die in Form von Wasserdampf D, im vorliegenden Falle bestehend aus dem ersten Wasserdampf D1 und dem zweiten Wasserdampf D2, dem Infusorbehälter erster Art 50* zugeführt wird, und über einen vorzugsweise im oberen Bereich angeordneten Brüden-Austritt 72 abzuleiten. Ein derart behandeltes flüssiges Nahrungsmittelprodukt P* verlässt die Vakuumkammer 56 über eine vorzugsweise im unteren Bereich an einem sich verjüngenden Boden angeordnete Abführleitung 74 auf dem Weg über eine zweite Fördereinrichtung 58, die vorzugsweise als Zentrifugalpumpe ausgebildet ist.

**Figur 2** zeigt einen Infusorbehälter 50, der als bekannter Infusorbehälter zweiter Art 500 an einer Auslassöffnung unmittelbar mit einer rotierenden Verdrängerpumpe 540 verbunden ist, die das erhitzte flüssige Nahrungsmittelprodukt P nach unten abführt (siehe WO 2016/012026 A1). Dem Kopfbereich des Infusorbehälters zweiter Art 540 wird das flüssige Nahrungsmittelprodukt P über den Produkt-Einlass 60 zentral zugeführt und der erste Wasserdampf D1 wird über den äußeren Wasserdampf-Einlass 62 radial von außen, den zentralen Produktstrahl umschließend, eingeleitet. Ein Bodenteil des Infusorbehälters zweiter Art 500 ist mit einer Kühlung K versehen, die sich bis hinunter an die rotierende Verdrängerpumpe 540 und in das Pumpengehäuse hinein erstreckt. Die Zufuhr des Kühlmittels erfolgt an der rotierenden Verdrängerpumpe 540 über einen pumpenseitigen Kühlmittel-Eintritt 67, seine Abfuhr über den infusorseitigen Kühlmittel-Austritt 68.

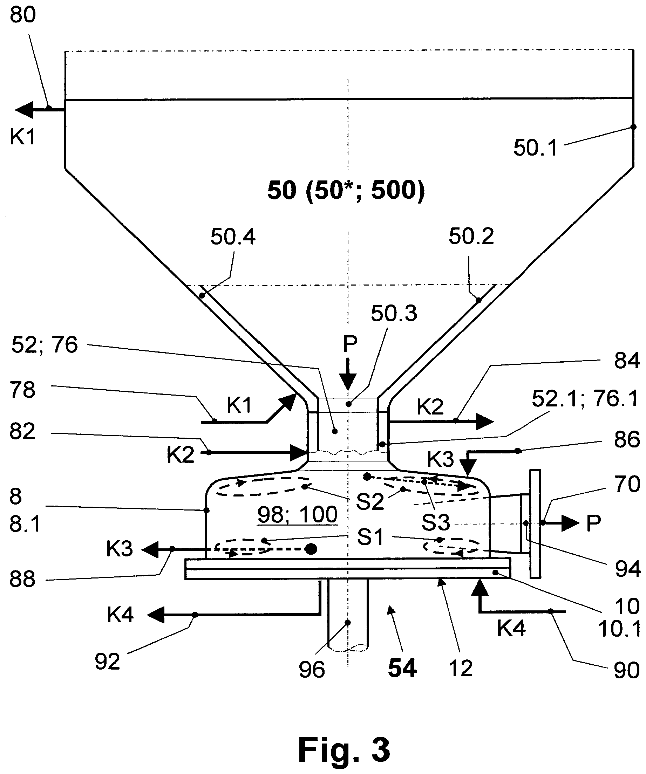

Die in **Figur 3** dargestellte Anordnungslage einer erfindungsgemäßen Zentrifugalpumpe 54, bei der die Rotationsachse einer Pumpenwelle 96 in Schwerkraftrichtung orientiert ist, ist geeignet, um diese Zentrifugalpumpe 54 mit einem als Saugstutzen ausgebildeten Einlass 76 unmittelbar an eine Auslassöffnung 50.3 in einem Behälterboden 50.2 eines Infusorbehälters 50, der als Infusorbehälter erster oder zweiter Art 50*, 500 ausgebildet sein kann und nachfolgend für diese Ausführungsformen steht, anzuschließen. Der Infusorbehälter 50 geht oberhalb des sich vorzugsweise nach unten verjüngenden Behälterbodens 50.2 in einen vorzugsweise zylindrischen Behältermantel 50.1 über. Der Behälterboden 50.2 und ein sich daran anschließender Teilabschnitt des Behältermantels 50.1 sind mit einem behälterseitigen Kühlmittelraum 50.4 versehen, der einen ersten Kühlmittel-Eintritt 78 zur Zufuhr und einen ersten Kühlmittel-Austritt 80 zur Abfuhr eines Kühlmittels zur Kühlung des Behälterbodens K1 aufweist.

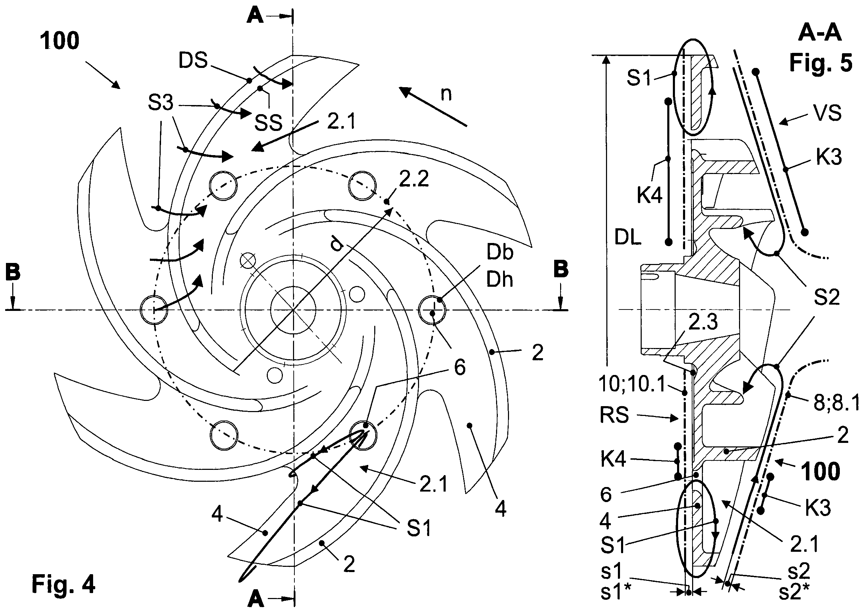

Die Zentrifugalpumpe 54 eignet sich in besonderer Weise zur Förderung hitzeempfindlicher flüssiger Nahrungsmittelprodukte P, wie Molkenproteinkonzentrate, Babynahrung, flüssige Babynahrungskonzentrate, nahrhafte Getränke oder Käsereimilch, die über den Einlass 76 ein- und aus einem als Druckstutzen ausgebildeten Auslass 94 in die zur Vakuumkammer 56 führende Verbindungsleitung 70 austreten. Die Zentrifugalpumpe 54 besitzt weiterhin in an sich bekannter Weise ein Pumpengehäuse 12, welches von wenigstens einem Gehäusedeckel 8 und einer Gehäuserückwand 10 gebildet ist. Im Pumpengehäuse 12 ist eine in fluidgängiger Verbindung mit dem Einlass 76 und dem Auslass 94 stehende Pumpenkammer 98 ausgebildet, die ein Laufrad 100 (siehe hierzu die **Figuren 4** und **5**) drehbar aufnimmt. An die Auslassöffnung 50.3 schließt sich ein rohrförmiger Abschnitt 52, 76 an, der entweder durch das aus dem Infusorbehälter 50 ausmündende Auslassrohr 52 oder durch einen Saugstutzen 76 der Zentrifugalpumpe 54 gebildet sein kann. Ist der rohrförmige Abschnitt 52, 76 als Auslassrohr 52 ausgebildet, dann kann dieses von dem auslassrohrseitigen Kühlmittelraum 52.1 umschlossen sein, ist er als Saustutzen 76 ausgebildet, dann kann dieser von einem saugstutzenseitigen Kühlmittelraum 76.1 umschlossen sein. In beiden Fällen wird dem Kühlmittelraum 52.1, 76.1 über einen zweiten Kühlmittel-Eintritt 82 Kühlmittel zur Kühlung des Auslassrohres oder des Saugstutzens K2 zugeführt und über einen zweiten Kühlmittel-Austritt 84 abgeführt.

Der Gehäusedeckel 8 ist mit einem gehäusedeckelseitigen Kühlmittelraum 8.1 versehen, der den Gehäusedeckel 8 vorzugsweise vollständig umschließt oder teilweise, beispielsweise in Form von Kühltaschen, berandet. Dem gehäusedeckelseitigen Kühlmittelraum 8.1 wird über einen dritten Kühlmittel-Eintritt 86 Kühlmittel zur Kühlung des Gehäusedeckels K3 zugeführt und über einen dritten Kühlmittel-Auslass 88 abgeführt. Die Gehäuserückwand 10 kann mit einem gehäuserückwandseitigen Kühlmittelraum 10.1 versehen sein, der die Gehäuse-rückwand 10 vorzugsweise vollständig oder teilweise, beispielsweise in Form von Kühltaschen, berandet. Dem gehäuserückwandseitigen Kühlmittelraum 10.1 wird über einen vierten Kühlmittel-Eintritt 90 Kühlmittel zur Kühlung der Gehäuserückwand K4 zugeführt und über einen vierten Kühlmittel-Auslass 92 abgeführt. Schließlich zeigt **Figur 3****,** näherungsweise und schematisch angedeutet, eine erste Spülströmung S1, eine zweite Spülströmung S2 und eine dritte Spülströmung S3 gemäß der Erfindung, die in den **Figuren 4** und **5** näher erläutert sind.

Die **Figuren 4** und **5** zeigen das zum Gehäusedeckel 8 hin offene und zur Gehäuserückwand 10 hin durch eine Laufradrückseite 4 geschlossene Laufrad 100 mit in einer Ebene und bezogen auf eine Drehrichtung n (siehe **Figur 4****)** rückwärtsgekrümmten Schaufeln 2, die jeweils vorzugsweise senkrecht auf der Laufradrückseite 4 stehen, wobei zwischen zwei benachbarten Schaufeln 2 jeweils ein Schaufelkanal 2.1 gebildet ist. Die rückwärtsgekrümmte Beschaufelung ist kein zwingendes Merkmal des Laufrades 100 für die erfindungsgemäße Zentrifugalpumpe 54. Eine vorwärtsgekrümmte oder rein radial orientierte Beschaufelung in ebener oder auch räumlicher Krümmung ist mit Blick auf die Realisierung einer erfindungsgemäß gespülten Zentrifugalpumpe 54 ohne Einschränkung ausführbar. Eine im Wesentlichen durch die Laufradrückseite 4 gebildete Rückseite RS des Laufrades 100 ist um einen hinteren Laufradspalt s1 von der Gehäuserückwand 10 beabstandet (**Figur 5**). Auch eine im Wesentlichen durch die Vorderkanten der Schaufeln 2 gebildete Vorderseite VS des Laufrades 100 ist um einen vorderen Laufradspalt s2 von dem Gehäusedeckel 8 beabstandet.

Der hintere und/oder der vordere Laufradspalt s1, s2 sind/ist gegenüber jeweils einem diesbezüglichen minimalen hinteren und vorderen Laufradspalt s1*, s2*, der die mechanische Funktionsfähigkeit der Zentrifugalpumpe 54 sicherstellt, durch Reduzierung der Breite des Laufrades 100 im Bereich des vorderen und des hinteren Laufradspaltes s1, s2 bis zu einem Mehrfachen (Faktor 1,5 bis 10, vorzugsweise 2 bis 5) vergrößert.

Eine Ausführungsform sieht vor, dass der vordere Laufradspalt s2 an einem äußeren Laufraddurchmesser DL des Laufrades 100 eine maximale Vergrößerung erfährt, die bis in den Bereich des Eintritts in den Schaufelkanal 2.1 kontinuierlich bis auf den minimalen vorderen Laufradspalt s2* abnimmt. Eine diesbezügliche Reduzierung der Breite des Laufrades 100 an dem äußeren Laufraddurchmesser DL beträgt vorzugsweise 40 bis 55 %, vorzugsweise hier 50 bis 55 %, der Breite eines hydraulisch optimierten Laufrades.

Eine weitere Ausführungsform sieht vor, dass der Zugang zum minimalen hinteren, radial orientierten Laufradspalt s1*, der von dem äußeren Laufraddurchmesser DL des Laufrades 100 seinen Anfang nimmt und sich bis zu einer Nabe des Laufrades 100 erstreckt, durch Reduzierung des äußeren Laufraddurchmessers DL um bis zu 5 mm erweitert ist, wodurch das Laufrad 100 radial außenseits gegenüber dem Pumpengehäuse 12 ein Stück weit zurücktritt. Eine Vergrößerung des hinteren Laufradspaltes s1 besteht erfindungsgemäß und bevorzugt darin, dass die Laufradrückseite 4 im Bereich zwischen der Spülbohrung 6 und der Nabe des Laufrades 100 eine ringflächenförmige Ausdrehung 2.3 erfährt (siehe **Figur 5**), deren axiale Tiefe bis zu 2 mm, vorzugsweise 0,5 bis 1 mm, beträgt. Eine Bemessung des vorderen und/oder des hinteren Laufradspaltes s1, s2 in der vorstehend beschriebenen Weise ist abhängig von den spezifischen Eigenschaften des erhitzten flüssigen Nahrungsmittelprodukts P und wird vorzugsweise im Feldversuch ermittelt.

Jeder Schaufelkanal 2.1 zwischen zwei benachbarten Schaufeln 2 des Laufrades 100 steht im Bereich seiner begrenzenden Laufradrückseite 4 über wenigstens eine die Laufradrückseite 4 durchdringende Spülbohrung 6 mit dem hinteren Laufradspalt s1 in fluidgängiger Verbindung (**Figur 5**).

Nach einer Ausführungsform sind bei einer einzigen Spülbohrung 6 in jedem Schaufelkanal 2.1 alle diese Spülbohrungen 6 auf einem einzigen Lochkreis 2.2 mit einem Lochkreisdurchmesser d angeordnet. Dabei ist der geometrische Ort für die jeweilige Durchdringungsstelle der Spülbohrung 6 mit der Laufradrückseite 4, der auch den Lochkreisdurchmesser d festlegt, näherungsweise durch die Mitte des Schaufelkanals 2.1, bezogen auf den Abstand der Schaufeln 2 an der Durchdringungsstelle, und näherungsweise durch die Mitte einer maximalen Stromfadenlänge des Schaufelkanals 2.1 zwischen dessen Ein- und Austritt bestimmt.

Die Spülbohrung 6 ist entweder vorzugsweise kreisförmig mit einem Bohrungsdurchmesse Db ausgeführt oder sie weist alternativ eine von der Kreisform abweichende Form mit einem für diese Form maßgeblichen hydraulischen Durchmesser Dh auf (**Figur 4**). Dabei wird bevorzugt vorgeschlagen, dass der Bohrungsdurchmesser Db oder der hydraulische Durchmesser Dh 30 bis 50 % und in diesem Bereich bevorzugt 40 bis 50 % vom Abstand der Schaufeln 2 an der Durchdringungsstelle beträgt.

In jedem Schaufelkanal können mehr als eine Spülbohrung vorgesehen sein, wobei jede der mehreren Spülbohrungen 6 eines Schaufelkanals 2.1 auf einem zugeordneten Lochkreis 2.2 angeordnet ist, und dass die Lochkreise 2.2 radial voneinander beabstandet sind. Die Spülbohrungen 6 auf unterschiedlichen Lochkreisen 2.2 können mit gleichen Durchmessern Db bzw. hydraulischen Durchmessern Dh oder von Lochkreis zu Lochkreis mit unterschiedlichen Durchmessern Db bzw. hydraulischen Durchmessern Dh ausgeführt sein. Wegen der, in radialer Richtung gesehen, von innen nach außen abnehmenden Druckdifferenz zwischen hinterem Radseitenraum und dem Schaufelkanal 2.1 sieht ein vorteilhafte Ausführungsform vor, dass die Durchtrittsquerschnitte der Spülbohrungen 6 auf den verschiedenen Lochkreisen 2.2 mit kleiner werdendem Lochkreisdurchmesser d kleiner werden. Die Bohrungsdurchmesser Db oder die hydraulischen Durchmesser Dh der Spülbohrungen 6 werden somit tendenziell kleiner, je näher sie an den Nabenbereich des Laufrades 100 heranrücken, wenn ein bestimmter Spülvolumenstrom erreicht werden soll.

Wenigstens der Gehäusedeckel 8 ist mit dem von einem Kühlmittel durchströmbaren gehäusedeckelseitigen Kühlmittelraum 8.1 versehen. Im Bedarfsfalle kann die Gehäuserückwand 10 über einen gehäuserückwandseitigen Kühlmittelraum 10.1 gekühlt werden. Nach einer vorteilhaften Ausführungsform ist zusätzlich zu dem gehäusedeckelseitigen Kühlmittelraum 8.1 und dem gehäuserückwandseitigen Kühlmittelraum 10.1 der Einlass 76, wenn er als Saugstutzen ausgebildet ist, mit dem saugstutzenseitigen Kühlmittelraum 76.1 versehen. Es wird vorgeschlagen, dass der saugstutzenseitige Kühlmittelraum 76.1, der gehäusedeckelseitige Kühlmittelraum 8.1 und der gehäuserückwandseitige Kühlmittelraum 10.1 getrennt voneinander mit Kühlmittel beaufschlagt sind. Eine andere Ausführungsform sieht vor, dass wenigstens zwei Kühlmittelräume 76.1, 8.1, 10.1 miteinander in Reihe geschaltet sind. Nach einem weiteren Vorschlag ist der saugstutzenseitige Kühlmittelraum 76.1 ein integraler Abschnitt des gehäusedeckelseitigen Kühlmittelraums 8.1.

Folgende Maßnahmen, mit denen eine Zentrifugalpumpe nach dem Stand der Technik erfindungsgemäß zu modifizieren ist, stellen in Kombination miteinander oder jeweils auch für sich allein gesehen die erfindungsgemäße Spülung des Laufrades 100 sicher:
- Verbreiterung des hinteren Laufradspaltes s1 und/oder des vorderen Laufradspaltes s2 (siehe **Figur 5**) entweder
   o durch beiderseitiges Abdrehen des Laufrades 100
   o oder durch ein in Richtung der Pumpenwelle 96 axial wirksames Abstandselement, das zwischen dem Gehäusedeckel 8 und der Gehäuserückwand 10 angeordnet ist, wobei das Laufrad 100 in Bezug zur Gehäuserückwand 10 nicht versetzt oder auf oder mit der Pumpenwelle 96 in der Pumpenkammer 98 entsprechend axial versetzt ist.
- Anordnung von vorgenannten Spülbohrungen 6 in der vorstehend beschriebenen Weise.

Die **Figuren 4** und **5** verdeutlichen die Wirkungen der erfindungsgemäßen vorstehenden Maßnahmen. Durch die Verbreiterung des hinteren Laufradspaltes s1 bzw. durch den erweiterten Zugang zu diesem wird der zugeordnete hintere Radseitenraum mehr oder weniger ungedrosselt mit dem an der Austrittsseite des Laufrades 2, das dort den äußeren Laufraddurchmesser DL besitzt, herrschenden statischen Druck über seinen gesamten radialen Erstreckungsbereich beaufschlagt. An der jeweiligen Spülbohrung 6 liegt im Schaufelkanal 2.1 ein geringerer statischer Druck als im hinteren Radseitenraum an. Dadurch ergibt sich im Schaufelkanal 2.1, wegen der ursächlichen Durchströmung der Spülbohrung 6 vom hinteren Radseitenraum in den Schaufelkanal 2.1 hinein, die radial von innen nach außen gerichtete erste Spülströmung S1, wie dies in **Figur 5** und in **Figur 4****,** in letzterer nur beispielhaft an einem Schaufelkanal 2.1 gezeigt, dargestellt ist. Da das im hinteren Radseitenraum befindliche erhitzte flüssige Nahrungsmittelprodukt P an der Gehäuserückwand 10 gekühlt werden kann, weil dort gegebenenfalls die Kühlung der Gehäuserückwand K4 vorgesehen ist, gelangt nun durch die erste Spülströmung S1 permanent gekühltes flüssiges Nahrungsmittelprodukt P vorzugsweise in den Kernbereich der Strömung im Schaufelkanal 2.1.

Durch die beschriebene Verbreiterung des vorderen Laufradspaltes s2 kann sich, wie dies in **Figur 4** im linken oberen Quadranten des Laufrades 100 gezeigt ist, über die jeweilige stirnseitige, freie Vorderkante der Schaufel 2 und über deren radialen Erstreckungsbereich gesehen, die dritte Spülströmung S3 ausbilden. Die Triebkräfte für diese dritte Spülströmung S3 resultieren aus dem Druckunterschied an jeder Schaufel 2, der durch den statischen Druck auf der Schaufeloberseite, einer Druckseite DS, und durch den statischen Druck auf der Schaufelunterseite, einer Saugseite SS, gegeben ist. Die dritte Spülströmung S3 sorgt für eine zusätzliche Bewegung gegenüber dem und überwiegend in Umfangsrichtung zum Gehäusedeckel 8 und damit für eine forcierte Kühlung des flüssigen Nahrungsmittelprodukts P, weil in diesem Gehäusedeckel 8 die Kühlung des Gehäusedeckels K3 installiert ist (siehe **Figur 5**). Die dritte Spülströmung S3 bewirkt auch hier einen Austausch des flüssigen Nahrungsmittelprodukts in den und aus dem Kernbereich der Strömung im zugeordneten Schaufelkanal 2.1. Durch den verbreiterten vorderen Laufradspalt s2 kann sich wegen des Unterschiedes des statischen Druckes am Austritt des Laufrades 100 und des statischen Druckes im saugseitigen Eintritt des Laufrades 100 die radial orientierte zweite Spülströmung S2 ausbilden (siehe **Figur 5**), der die dritte Spülströmung S3 überlagert ist. Diese zweite Spülströmung S2 sorgt auch hier für einen Austausch des flüssigen Nahrungsmittelprodukts P in den und aus dem Kernbereich der Strömung im zugeordneten Schaufelkanal 2.1.

### Ausführungsbeispiel einer erfindungsgemäßen Zentrifugalpumpe 54:

Die Zentrifugalpumpe 54 wird von einem Antriebsmotor mit einer Nennleistung von 15 kW bei einer Nenndrehzahl n = 2900 1/min angetrieben. Der äußere Laufraddurchmesser DL ist von ursprünglich 205 mm auf 195 mm abgedreht. Die Laufradbreite am äußeren Laufraddurchmesser DL ist von ursprünglich 19 mm auf 9 mm reduziert, wobei die Reduzierung bis in den Bereich des Eintritts in den Schaufelkanal 2.1 kontinuierlich bis auf den minimalen vorderen Laufradspalt s2* abnimmt. Der hintere Laufradspalt s1 ist im Bereich der ringflächenförmigen Ausdrehung 2.3 gegenüber dem minimalen hinteren Laufradspalt s1* um 0,7 mm vergrößert. Jede Spülbohrung 6 im zugeordneten Schaufelkanal 2.1 der insgesamt sechs Schaufelkanäle 2.1 ist kreisförmig ausgeführt und besitzt einen Bohrungsdurchmesser Db = 10 mm.

Die vorstehend beschriebenen erfindungsgemäßen Maßnahmen sind sinngemäß auch auf ein geschlossenes Laufrad übertragbar, wobei dann zwangsläufig eine dritte Spülströmung S3 über die stirnseitige Vorderkante der jeweiligen Schaufel 2 in der vorbeschriebenen Weise nicht möglich ist. Als Ersatz für diese Spülwege wäre dann eine Deckscheibe des Laufrades 100 mit weiteren Spülbohrungen zu versehen, die den jeweils zugeordneten Schaufelkanal mit einem vorderen Radseitenraum, gebildet zwischen der Deckscheibe und dem Gehäusedeckel 8, verbinden. Es würde sich dann eine Spülströmung adäquat zur vorbeschriebenen ersten Spülströmung S1 einstellen.

### BEZUGSZEICHENLISTE DER VERWENDETEN ABKÜRZUNGEN

**Figuren 1** und **2** **(Stand der Technik)**
- 1000: Anlage

- 50: Infusorbehälter, allgemein
- 50*: Infusorbehälter erster Art
- 500: Infusorbehälter zweiter Art
- 50.4: behälterbodenseitiger Kühlmittelraum

- 52: Auslassrohr
- 52.1: auslassrohrseitiger Kühlmittelraum

- 54: erste Fördereinrichtung
- 540: rotierende Verdrängerpumpe
- 56: Vakuumkammer
- 58: zweite Fördereinrichtung
- 60: Produkt-Einlass
- 62: äußerer Wasserdampf-Einlass
- 64: innerer Wasserdampf-Einlass
- 66: infusorseitiger Kühlmittel-Eintritt
- 67: pumpenseitiger Kühlmittel-Eintritt
- 68: infusorseitiger Kühlmittel-Austritt
- 70: Verbindungsleitung
- 72: Brüden-Austritt
- 74: Abführleitung (für behandeltes Nahrungsmittelprodukt)

- D: Wasserdampf
- D1: erster Wasserdampf
- D2: zweiter Wasserdampf

- K: Kühlung
- P: flüssiges Nahrungsmittelprodukt
- P*: behandeltes Nahrungsmittelprodukt
- W: Wasser

**Figur 3**
- 50: Infusorbehälter
- 50*: Infusorbehälter erster Art
- 500: Infusorbehälter zweiter Art
- 50.1: Behältermantel
- 50.2: Behälterboden
- 50.3: Auslassöffnung
- 50.4: behälterbodenseitiger Kühlmittelraum

- 8: Gehäusedeckel
- 8.1: gehäusedeckelseitiger Kühlmittelraum

- 10: Gehäuserückwand
- 10.1: gehäuserückwandseitiger Kühlmittelraum

- 12: Pumpengehäuse
- 54: Zentrifugalpumpe

- 76: Einlass (Saugstutzen)
- 76.1: saugstutzenseitiger Kühlmittelraum

- 78: erster Kühlmittel-Eintritt
- 80: erster Kühlmittel-Austritt

- 82: zweiter Kühlmittel-Eintritt
- 84: zweiter Kühlmittel-Austritt

- 86: dritter Kühlmittel-Eintritt
- 88: dritter Kühlmittel-Austritt

- 90: vierter Kühlmittel-Eintritt
- 92: vierter Kühlmittel-Austritt
- 94: Auslass (Druckstutzen)
- 96: Pumpenwelle
- 98: Pumpenkammer
- 100: Laufrad

- K1: Kühlung des Behälterbodens
- K2: Kühlung des Auslassrohres oder des Saugstutzens
- K3: Kühlung des Gehäusedeckels
- K4: Kühlung der Gehäuserückwand

- S1: erste Spülung
- S2: zweite Spülung
- S3: dritte Spülung

**Figuren 4** und **5**
- 2: Schaufel
- 2.1: Schaufelkanal
- 2.2: Lochkreis
- 2.3: ringflächenförmige Ausdrehung

- 4: Laufradrückseite
- 6: Spülbohrung

- DL: äußerer Laufraddurchmesser
- Db: Bohrungsdurchmesser
- Dh: hydraulischer Durchmesser

- DS: Druckseite (Schaufel)
- RS: Rückseite (Laufrad)

- SS: Saugseite (Schaufel)
- VS: Vorderseite (Laufrad)
- d: Lochkreisdurchmesser

- s1: hinterer Laufradspalt
- s1*: minimaler hinterer Laufradspalt
- s2: vorderer Laufradspalt
- s2*: minimaler vorderer Laufradspalt

- n: Drehrichtung

## Patentansprüche

1. Verfahren zur Behandlung hitzeempfindlicher flüssiger Nahrungsmittelprodukte (P), bei dem Wasserdampf (D) das flüssige Nahrungsmittelprodukt (P) zur Bildung eines keimfreien Zustands in einem Infusorbehälter (50; 50*, 500) direkt erhitzt, bei dem dem flüssigen Nahrungsmittelprodukt (P) durch Entspannung auf einen niedrigeren Druck Wasser (W) in einer Menge, die jener des zuvor zugeführten Wasserdampfes (D) entspricht, entzogen wird, bei dem das flüssige Nahrungsmittelprodukt (P) zwischen der Erhitzung und der Entspannung eine Förderung mittels einer als Zentrifugalpumpe ausgebildeten ersten Fördereinrichtung (54) erfährt und bei dem nach der direkten Erhitzung folgende Behandlungsschritte (a) und (b) vorgesehen sind:
das flüssige Nahrungsmittelprodukt (P)
(a) erfährt eine erste Kühlung (K1) wenigstens am Behälterboden (50.2) des Infusorbehälters (50; 50*, 500) bis in eine dortige Auslassöffnung (50.3) hinein;
(b) erfährt eine zweite Kühlung (K2) in einem sich an die Auslassöffnung (50.3) unmittelbar anschließenden rohrförmigen Abschnitt (52, 76), der entweder durch ein aus dem Infusorbehälter (50; 50*, 500) ausmündendes Auslassrohr (52) oder durch einen Saugstutzen (76) der Zentrifugalpumpe (54) gebildet ist; **dadurch gekennzeichnet, dass** die weiteren Behandlungsschritte (c) und (d) vorgesehen sind: das Nahrungsmittelprodukt (P)
(c) erfährt eine dritte Kühlung (K3) in einem Gehäusedeckel (8) eines Pumpengehäuses (12) der Zentrifugalpumpe (54), der sich unmittelbar an das Auslassrohr (52) oder den Saugstutzen (76) anschließt;
(d) dient mit einem Teil seines in einem Laufrad (100) der Zentrifugalpumpe (54) geförderten Volumenstroms, das zu dem Gehäusedeckel (8) der Zentrifugalpumpe (54) hin offen ausgebildet ist, wenigstens einer planmäßigen Spülung des Pumpengehäuses (12) und des Laufrades (100) über einen hinteren Laufradspalt (s1), der zwischen einer Gehäuserückwand (10) der Zentrifugalpumpe (54) und dem Laufrad (100) vorgesehen ist, und über einen vorderen Laufradspalt (s2), der zwischen dem Gehäusedeckel (8) und dem Laufrad (100) vorgesehen ist, wobei die Volumenströme der planmäßigen Spülungen die zwangsläufigen Ausgleichsströmungen innerhalb des Pumpengehäuses (12), die sich aus einer hydraulisch optimierten Auslegung der Zentrifugalpumpe (54) mit einem jeweils minimalen hinteren und vorderen Laufradspalt (s1*, s2*), die die mechanische Funktionsfähigkeit der Zentrifugalpumpe (54) sicherstellen, ergeben, bis zu einem Mehrfachen übersteigen.

2. Verfahren nach Anspruch 1,
**dadurch gekennzeichnet,**
**dass** das flüssige Nahrungsmittelprodukt (P) eine vierte Kühlung (K4) in der Gehäuserückwand (10) des Pumpengehäuses (12) erfährt.

3. Verfahren nach Anspruch 1 oder 2,
**dadurch gekennzeichnet,**
**dass** eine erste und eine zweite Spülung (S1, S2) jeweils durch Rezirkulation über das Laufrad (100), getrieben jeweils durch Druckunterschiede im Pumpengehäuse (12), generiert sind.

4. Verfahren nach Anspruch 3,
**dadurch gekennzeichnet,**
**dass** die erste Spülung (S1) über den hinteren Laufradspalt (s1) zwischen dem Laufrad (100) und der Gehäuserückwand (10) erfolgt, wobei die erste Spülung (S1) in die Strömung durch das Laufrad (100) eingreift.

5. Verfahren nach Anspruch 3 oder 4,
**dadurch gekennzeichnet,**
**dass** die zweite Spülung (S2) über den vorderen Laufradspalt (s2) zwischen dem Gehäusedeckel (8) und dem Laufrad (100) erfolgt, wobei die zweite Spülung (S2) in die Strömung durch das Laufrad (100) eingreift.

6. Verfahren nach einem der vorhergehenden Ansprüche,
**dadurch gekennzeichnet,**
**dass** eine dritte Spülung (S3) durch Ausgleichsströmungen zwischen einer jeweiligen Druck- und Saugseite einer Schaufel (2) des offenen Laufrades (100) und über den vorderen Laufradspalt (s2) erfolgt.

7. Verfahren nach einem der Ansprüche 2 bis 6,
**dadurch gekennzeichnet,**
**dass** die Kühlungen (K1, K2, K3, K4) jeweils getrennt voneinander betrieben werden.

8. Verfahren nach einem der Ansprüche 2 bis 6,
**dadurch gekennzeichnet,**
**dass** wenigstens zwei Kühlungen (K1, K2, K3, K4) in Reihe geschaltet sind.

9. Verfahren nach einem der Ansprüche 2 bis 8,
**dadurch gekennzeichnet,**
**dass** die Kühlungen (K1, K2, K3, K4) im Gegenstrom zum erhitzten flüssigen Nahrungsmittelprodukt (P) betrieben werden.

10. Anlage (1000) zur Behandlung hitzeempfindlicher flüssiger Nahrungsmittelprodukte (P),
• mit einem Infusorbehälter (50; 50*, 500), in dem Wasserdampf (D) das flüssige Nahrungsmittelprodukt (P) zur Bildung eines keimfreien Zustands direkt erhitzt,
• mit einer mit dem Infusorbehälter (50; 50*, 500) über eine Verbindungsleitung (70) in fluidgängiger Verbindung stehenden Vakuumkammer (56), in der dem erhitzen flüssigen Nahrungsmittelprodukt (P) durch Entspannung auf einen niedrigeren Druck Wasser (W) in einer Menge, die jener des zuvor zugeführten Wasserdampfes (D) entspricht, entzogen wird,
• mit einer in der Verbindungsleitung (70) angeordneten, als Zentrifugalpumpe ausgebildeten ersten Fördereinrichtung (54) zur Förderung des erhitzten flüssigen Nahrungsmittelprodukts (P) von dem Infusorbehälter (50; 50*, 500) zu der Vakuumkammer (56),
• mit einer in einem Behälterboden (50.2) des Infusorbehälters (50; 50*, 500) angeordneten Auslassöffnung (50.3) zur Abfuhr des erhitzten flüssigen Nahrungsmittelprodukts (P),
• mit einem sich an die Auslassöffnung (50.3) anschließenden rohrförmigen Abschnitt (52, 76) zur Weiterleitung des erhitzten flüssigen Nahrungsmittelprodukts (P), der entweder durch ein aus dem Infusorbehälter (50; 50*, 500) ausmündendes Auslassrohr (52) oder durch einen Saugstutzen (76) der Zentrifugalpumpe (54) gebildet ist,
• mit einem behälterbodenseitigen Kühlmittelraum (50.4) zur Kühlung des den Behälterboden (50,2) beaufschlagenden erhitzten flüssigen Nahrungsmittelprodukts (P),
• mit einem auslassrohrseitigen Kühlmittelraum (52.1) oder einem saugstutzenseitigen Kühlmittelraum (76.1) zur Kühlung des den rohrförmigen Abschnitt (52, 76) durchströmenden erhitzten flüssigen Nahrungsmittelprodukts (P),
**dadurch gekennzeichnet, dass** ein
Pumpengehäuse (12) der Zentrifugalpumpe (54), das wenigstens aus einem Gehäusedeckel (8) und einer Gehäuserückwand (10) gebildet ist, einen gehäusedeckelseitigen Kühlmittelraum (8.1) zur Kühlung des geförderten erhitzten flüssigen Nahrungsmittelprodukts (P) aufweist, und dass die Zentrifugalpumpe (54), die ein zu dem Gehäusedeckel (8) hin offenes Laufrad (100) aufweist so ausgelegt ist, dass mit einem Tei des in dem Laufrad (100) geförderten Volumenstroms des erhitzen flüssigen Nahrungsmittelprodukts (P) wenigstens eine planmäßige Spülung des Pumpengehäuses (12) und des Laufrades (100) über einen hinteren Laufradspalt (s1), der zwischen der Gehäuserückwand (10) und dem Laufrad (100) vorgesehen ist, und über einen vorderen Laufradspalt (s2), der zwischen dem Gehäusedeckel (8) und dem Laufrad (100) vorgesehen ist, erfolgt, und wobei die Volumenströme der planmäßigen Spülungen die zwangsläufigen Ausgleichsströmungen innerhalb des Pumpengehäuses (12), die sich aus einer hydraulisch optimierten Auslegung der Zentrifugalpumpe (54) mit einem jeweils minimalen hinteren und vorderen Laufradspalt (s1*, s2*), die die mechanische Funktionsfähigkeit der Zentrifugalpumpe (54) sicherstellen, ergeben, bis zu einem Mehrfachen übersteigen.

11. Anlage nach Anspruch 10,
**dadurch gekennzeichnet,**
**dass** das Pumpengehäuse (12) einen gehäuserückwandseitigen Kühlmittelraum (10.1) aufweist.

12. Anlage nach Anspruch 10 oder 11,
**dadurch gekennzeichnet,**
**dass** eine erste Spülung (S1) über den hinteren Laufradspalt (s1) zwischen dem Laufrad (100) und der Gehäuserückwand (10) auf dem Weg über wenigsten eine in der Laufradrückseite (4) angeordnete Spülbohrung (6) erfolgt.

13. Anlage nach einem der Ansprüche 10 bis 12,
**dadurch gekennzeichnet,**
**dass** eine zweite Spülung (S2) über den vorderen Laufradspalt (s2) zwischen dem Gehäusedeckel (8) und dem Laufrad (100) erfolgt.

14. Anlage nach einem der Ansprüche 10 bis 13,
**dadurch gekennzeichnet,**
**dass** eine dritte Spülung (S3) durch Ausgleichsströmungen zwischen einer jeweiligen Druck- und Saugseite einer Schaufel (2) des offenen Laufrades (100) und über den vorderen Laufradspalt (s2) erfolgt.

15. Anlage nach einem der Ansprüche 11 bis 14,
**dadurch gekennzeichnet,**
**dass** der behälterbodenseitige Kühlmittelraum (50.4), der auslassrohrseitige oder der saugstutzenseitige Kühlmittelraum (52.1, 76.1), der gehäusedeckelseitige Kühlmittelraum (8.1) und der gehäuserückwandseitige Kühlmittelraum (10.1) getrennt voneinander mit Kühlmittel beaufschlagt werden.

16. Anlage nach einem der Ansprüche 11 bis 14,
**dadurch gekennzeichnet,**
**dass** wenigstens zwei Kühlmittelräume (50.4, 52.1, 76.1, 8.1, 10.1) miteinander in Reihe geschaltet sind.

17. Zentrifugalpumpe (54) zur Förderung hitzeempfindlicher flüssiger Nahrungsmittelprodukte (P), mit einem Einlass (76), einem Auslass (94), einem Pumpengehäuse (12), welches von wenigstens einem Gehäusedeckel (8) und einer Gehäuserückwand (10) gebildet ist, einer im Pumpengehäuse (12) ausgebildeten und in fluidgängiger Verbindung mit dem Einlass (76) und dem Auslass (94) stehenden Pumpenkammer (98), einem in der Pumpenkammer (98) drehbar aufgenommenen Laufrad (100) mit Schaufeln (2), einem zwischen zwei benachbarten Schaufeln (2) jeweils ausgebildeten Schaufelkanal (2.1), der zum Gehäusedeckel (8) hin offen und zur Gehäuserückwand (10) hin durch eine Laufradrückseite (4) geschlossen ausgebildet ist, einem zwischen der Gehäuserückwand (10) und dem Laufrad (100) vorgesehenen hinteren Laufradspalt (s1) und einem zwischen dem Gehäusedeckel (8) und dem Laufrad (100) vorgesehenen vorderen Laufradspalt (s2),
**dadurch gekennzeichnet,**
• **dass** der hintere und/oder der vordere Laufradspalt (s1, s2) gegenüber jeweils einem diesbezüglichen minimalen hinteren und vorderen Laufradspalt (s1*, s2*), der die mechanische Funktionsfähigkeit der Zentrifugalpumpe (54) sicherstellt, durch Reduzierung der Breite des Laufrades (100) im Bereich des vorderen und des hinteren Laufradspaltes (s1, s2) bis zu einem Mehrfachen vergrößert sind/ist und
• **dass** wenigstens der Gehäusedeckel (8) mit einem von einem Kühlmittel durchströmbaren Kühlmittelraum (8.1) versehen ist.

18. Zentrifugalpumpe nach Anspruch 17,
**dadurch gekennzeichnet,**
**dass** jeder Schaufelkanal (2.1) im Bereich seiner begrenzenden Laufradrückseite (4) über wenigstens eine die Laufradrückseite (4) durchdringende Spülbohrung (6) mit dem hinteren Laufradspalt (s1) in fluidgängiger Verbindung steht.

19. Zentrifugalpumpe nach Anspruch 18,
**dadurch gekennzeichnet,**
**dass** der geometrische Ort für die jeweilige Durchdringungsstelle der Spülbohrung (6) mit der Laufradrückseite (4), der auch einen Lochkreisdurchmesser (d) festlegt,
• näherungsweise durch die Mitte des Schaufelkanals (2.1), bezogen auf den Abstand der Schaufeln (2) an der Durchdringungsstelle, und
• näherungsweise durch die Mitte einer maximalen Stromfadenlänge des Schaufelkanals (2.1) zwischen dessen Ein- und Austritt
bestimmt ist.

## Claims

1. A method for the treatment of heat-sensitive liquid food products (P), in which steam (D) directly heats the liquid food product (P) in order to form a sterile state in an infuser vessel (50; 50*, 500), in which water (W) in an amount corresponding to that of the previously supplied steam (D) is removed from the liquid food product (P) by decompression to a lower pressure, in which the liquid food product (P) is subjected to a conveyance between the heating and the decompression by means of a first conveying apparatus (54) configured as a centrifugal pump, and in which, following the direct heating, the following treatment steps (a) and (b) are provided:
the liquid food product (P)
(a) is subjected to a first cooling (K1) at least on the vessel floor (50.2) of the infuser vessel (50; 50*, 500) up to an outlet opening (50.3) located there;
(b) is subjected to a second cooling (K2) in a tubular section (52, 76) immediately adjoining the outlet opening (50.3), which tubular section is formed either by an outlet pipe (52) leading out of the infuser vessel (50; 50*, 500) or by an intake connector (76) of the centrifugal pump (54); **characterized in that** the further treatment steps (c) and (d) are provided: the food product (P)
(c) is subjected to a third cooling (K3) in a housing cover (8) of a pump housing (12) of the centrifugal pump (54), which housing cover immediately adjoins the outlet pipe (52) or the intake connector (76);
(d) serves, with a part of its volume flow conveyed in an impeller (100) of the centrifugal pump (54), which volume flow is configured to be open toward the housing cover (8) of the centrifugal pump (54), for at least one planned flushing operation of the pump housing (12) and of the impeller (100) via a rear impeller gap (s1) which is provided between a housing rear wall (10) of the centrifugal pump (54) and the impeller (100), and via a front impeller gap (s2) which is provided between the housing cover (8) and the impeller (100), wherein the volume flows of the planned flushing operations are up to several times greater than the inevitable equalization flows within the pump housing (12), which result from a hydraulically optimized design of the centrifugal pump (54) with an in each case minimal rear and front impeller gap (s1^{∗}, s2^{∗}) which ensure the mechanical functionality of the centrifugal pump (54).

2. The method according to Claim 1,
**characterized in that**
the liquid food product (P) is subjected to a fourth cooling (K4) in the housing rear wall (10) of the pump housing (12).

3. The method according to Claim 1 or 2,
**characterized in that**
a first and a second flushing operation (S1, S2) are generated respectively by recirculation via the impeller (100), driven respectively by pressure differences in the pump housing (12).

4. The method according to Claim 3,
**characterized in that**
the first flushing operation (S1) takes place via the rear impeller gap (s1) between the impeller (100) and the housing rear wall (10), wherein the first flushing operation (S1) engages in the flow through the impeller (100).

5. The method according to Claim 3 or 4,
**characterized in that**
the second flushing operation (S2) takes place via the front impeller gap (s2) between the housing cover (8) and the impeller (100), wherein the second flushing operation (S2) engages in the flow through the impeller (100).

6. The method according to any one of the preceding claims,
**characterized in that**
a third flushing operation (S3) takes place by equalization flows between a respective pressure side and intake side of a blade (2) of the open impeller (100) and via the front impeller gap (s2).

7. The method according to any one of Claims 2 to 6,
**characterized in that**
the coolings (K1, K2, K3, K4) are each operated separately from one another.

8. The method according to any one of Claims 2 to 6,
**characterized in that**
at least two coolings (K1, K2, K3, K4) are connected in series.

9. The method according to any one of Claims 2 to 8,
**characterized in that**
the coolings (K1, K2, K3, K4) are operated in the counterflow to the heated liquid food product (P).

10. An installation (1000) for the treatment of heat-sensitive liquid food products (P),
• having an infuser vessel (50; 50^{∗}, 500), in which steam (D) directly heats the liquid food product (P) in order to form a sterile state,
• having a vacuum chamber (56) in fluid-accessible connection with the infuser vessel (50; 50^{∗}, 500) via a connection line (70), in which water (W) in an amount corresponding to that of the previously supplied steam (D) is removed from the heated liquid food product (P) by decompression to a lower pressure,
• having a first conveying apparatus (54) arranged in the connection line (70), configured as a centrifugal pump for conveying the heated liquid food product (P) from the infuser vessel (50; 50^{∗}, 500) to the vacuum chamber (56),
• having an outlet opening (50.3) arranged in a vessel floor (50.2) of the infuser vessel (50; 50^{∗}, 500) for discharging the heated liquid food product (P),
• having a tubular section (52, 76) adjoining the outlet opening (50.3) for transferring the heated liquid food product (P), which is formed either by an outlet pipe (52) leading out of the infuser container (50; 50^{∗}, 500) or by an intake connector (76) of the centrifugal pump (54),
• having a vessel-floor-side cooling medium space (50.4) for cooling the heated liquid food product (P) loading the vessel floor (50.2),
• having an outlet-pipe-side cooling medium space (52.1) or an intake-connector-side cooling medium space (76.1) for cooling the heated liquid food product (P) flowing through the tubular section (52, 76),
**characterized in that** a pump housing (12) of the centrifugal pump (54), which is formed at least from a housing cover (8) and a housing rear wall (10), has a housing-cover-side cooling medium space (8.1) for cooling the conveyed heated liquid food product (P), and the centrifugal pump (54) which has an impeller (100) open toward the housing cover (8) is designed such that, with a part of the volume flow of the heated liquid food product (P) conveyed in the impeller (100), at least one planned flushing operation of the pump housing (12) and of the impeller (100) takes place via a rear impeller gap (s1) which is provided between the housing rear wall (10) and the impeller (100), and via a front impeller gap (s2) which is provided between the housing cover (8) and the impeller (100), and wherein the volume flows of the planned flushing operations are up to several times greater than the inevitable equalization flows within the pump housing (12), which result from a hydraulically optimized design of the centrifugal pump (54) with an in each case minimal rear and front impeller gap (s1^{∗}, s2^{∗}) which ensure the mechanical functionality of the centrifugal pump (54).

11. The installation according to Claim 10,
**characterized in that**
the pump housing (12) has a housing-rear-wall-side cooling medium space (10.1).

12. The installation according to Claim 10 or 11,
**characterized in that**
a first flushing operation (S1) takes place via the rear impeller gap (s1) between the impeller (100) and the housing rear wall (10) en route via at least one flushing bore hole (6) arranged in the impeller rear side (4).

13. The installation according to any one of Claims 10 to 12,
**characterized in that**
a second flushing operation (S2) takes place via the front impeller gap (s2) between the housing cover (8) and the impeller (100).

14. The installation according to any one of Claims 10 to 13,
**characterized in that**
a third flushing operation (S3) takes place by equalization flows between a respective pressure and intake side of a blade (2) of the open impeller (100) and via the front impeller gap (s2).

15. The installation according to any one of Claims 11 to 14,
**characterized in that**
the vessel-floor-side cooling medium space (50.4), the outlet-pipe-side or the intake-connector-side cooling medium space (52.1, 76.1), the housing-cover-side cooling medium space (8.1) and the housing-rear-wall-side cooling medium space (10.1) are supplied with cooling medium separately from each other.

16. The installation according to any one of Claims 11 to 14,
**characterized in that**
at least two cooling medium spaces (50.4, 52.1, 76.1, 8.1, 10.1) are connected with each other in series.

17. A centrifugal pump (54) for conveying heat-sensitive liquid food products (P), having an inlet (76), an outlet (94), a pump housing (12) which is formed by at least one housing cover (8) and a housing rear wall (10), a pump chamber (98) configured in the pump housing (12) and in fluid-accessible connection with the inlet (76) and the outlet (94), an impeller (100) with blades (2), which is rotatably received in the pump chamber (98), a blade channel (2.1) which is configured in each case between two neighboring blades (2), which blade channel is configured to be open toward the housing cover (8) and configured to be closed by an impeller rear side (4) toward the housing rear wall (10), a rear impeller gap (s1) provided between the housing rear wall (10) and the impeller (100), and a front impeller gap (s2) provided between the housing cover (8) and the impeller (100), **characterized in that**
• the rear and/or the front impeller gap (s1, s2) is/are respectively enlarged up to several times with respect to this type of minimal rear and front impeller gap (s1^{∗}, s2^{∗}), which ensures the mechanical functionality of the centrifugal pump (54), by reducing the width of the impeller (100) in the area of the front and of the rear impeller gap (s1, s2), and
• at least the housing cover (8) is equipped with a cooling medium space (8.1) which can be flowed through by a cooling medium.

18. The centrifugal pump according to Claim 17,
**characterized in that**
each blade channel (2.1) is in fluid-accessible connection with the rear impeller gap (s1) in the area of its adj acent impeller rear side (4) via at least one flushing bore (6) penetrating the impeller rear side (4).

19. The centrifugal pump according to Claim 18,
**characterized in that**
the geometric location for the respective penetration point of the flushing bore hole (6) with the impeller rear side (4), which also fixes a hole circle diameter (d), is determined
• approximately by the center of the blade channel (2.1), with respect to the distance of the blades (2) at the penetration point, and
• approximately by the center of a maximal flow filament length of the blade channel (2.1) between its inlet and outlet.

## Revendications

1. Procédé de traitement de produits alimentaires liquides (P) sensibles à la chaleur, dans lequel de la vapeur d'eau (D) chauffe directement le produit alimentaire liquide (P) pour former un état aseptique dans un récipient d'infuseur (50 ; 50^{∗}, 500), dans lequel de l'eau (W) est extraite du produit alimentaire liquide (P), par détente à une pression plus basse, dans une quantité correspondant à celle de la vapeur d'eau (D) alimentée précédemment, dans lequel, entre le chauffage et la détente, le produit alimentaire liquide (P) est transporté au moyen d'un premier dispositif de transport (54) conçu comme une pompe centrifuge, et dans lequel, après le chauffage direct, les étapes de traitement (a) et (b) ci-dessous sont mises en œuvre :
le produit alimentaire liquide (P)
(a) est soumis à un premier refroidissement (K1) au moins au niveau du fond de récipient (50.2) du récipient d'infuseur (50 ; 50^{∗}, 500) jusqu'à l'intérieur d'une ouverture d'évacuation (50.3) située à cet endroit ;
(b) est soumis à un deuxième refroidissement (K2) dans une section tubulaire (52, 76) immédiatement adjacente à l'ouverture d'évacuation (50.3), laquelle est formée soit par un conduit d'évacuation (52) débouchant du récipient d'infuseur (50 ; 50^{∗}, 500) soit par un embout d'aspiration (76) de la pompe centrifuge (54) ;
**caractérisé en ce que** les étapes de traitement supplémentaires (c) et (d) sont mises en œuvre :
le produit alimentaire liquide (P)
(c) est soumis à un troisième refroidissement (K3) dans un couvercle de boîtier (8) d'un boîtier de pompe (12) de la pompe centrifuge (54), lequel est immédiatement adjacent au conduit d'évacuation (52) ou à l'embout d'aspiration (76) ;
(d) sert, avec une partie de son débit volumétrique transporté dans un rotor (100) de la pompe centrifuge (54), lequel est conçu ouvert vers le couvercle de boîtier (8) de la pompe centrifuge (54), à effectuer au moins un rinçage planifié du boîtier de pompe (12) et du rotor (100) par le biais d'une fente de rotor arrière (s1) prévue entre une paroi arrière de boîtier (10) de la pompe centrifuge (54) et le rotor (100) et par le biais d'une fente de rotor avant (s2) prévue entre le couvercle de boîtier (8) et le rotor (100), où les débits volumiques des rinçages planifiés dépassent jusqu'à un multiple les flux de compensation inévitables à l'intérieur du boîtier de pompe (12), lesquels résultent d'une conception optimisée hydrauliquement de la pompe centrifuge (54), avec une fente de rotor arrière et avant minimale respective (s1^{∗}, s2^{∗}) garantissant la fonctionnalité mécanique de la pompe centrifuge (54).

2. Procédé selon la revendication 1,
**caractérisé en ce que**
le produit alimentaire liquide (P) est soumis à un quatrième refroidissement (K4) dans la paroi arrière de boîtier (10) du boîtier de pompe (12).

3. Procédé selon la revendication 1 ou 2,
**caractérisé en ce que**
un premier et un deuxième rinçage (S1, S2) sont générés respectivement par un recyclage par le biais du rotor (100), entraînés respectivement par des différences de pression dans le boîtier de pompe (12).

4. Procédé selon la revendication 3,
**caractérisé en ce que**
le premier rinçage (S1) est effectué par le biais de la fente de rotor arrière (s1) entre le rotor (100) et la paroi arrière de boîtier (10), le premier rinçage (S1) intervenant dans le flux à travers le rotor (100).

5. Procédé selon la revendication 3 ou 4,
**caractérisé en ce que**
le deuxième rinçage (S2) est effectué par le biais de la fente de rotor avant (s2) entre le couvercle de boîtier (8) et le rotor (100), le deuxième rinçage (S2) intervenant dans le flux à travers le rotor (100).

6. Procédé selon l'une des revendications précédentes,
**caractérisé en ce que**
un troisième rinçage (S3) est effectué par des flux de compensation entre un côté pression et aspiration respectif d'une pale (2) du rotor (100) ouvert et par le biais de la fente de rotor avant (s2).

7. Procédé selon l'une des revendications 2 à 6,
**caractérisé en ce que**
les refroidissements (K1, K2, K3, K4) sont effectués séparément les uns des autres.

8. Procédé selon l'une des revendications 2 à 6,
**caractérisé en ce que**
au moins deux refroidissements (K1, K2, K3, K4) sont montés en série.

9. Procédé selon l'une des revendications 2 à 8,
**caractérisé en ce que**
les refroidissements (K1, K2, K3, K4) sont effectués à contre-courant du produit alimentaire liquide (P) chauffé.

10. Installation (1000) de traitement de produit alimentaire liquide (P) sensible à la chaleur,
• avec un récipient d'infuseur (50 ; 50^{∗}, 500), dans lequel de la vapeur d'eau (D) chauffe directement le produit alimentaire liquide (P) pour former un état aseptique,
• avec une chambre à vide (56) en liaison fluidique avec le récipient d'infuseur (50 ; 50^{∗}, 500) par le biais d'une conduite de liaison (70) dans laquelle de l'eau (W) est extraite du produit alimentaire liquide (P) chauffé, par détente à une pression plus basse, dans une quantité correspondant à celle de la vapeur d'eau (D) alimentée précédemment,
• avec un premier dispositif de transport (54) conçu comme une pompe centrifuge et disposé dans la conduite de liaison (70), pour le transport du produit alimentaire liquide (P) chauffé, à partir du récipient d'infuseur (50 ; 50^{∗}, 500) vers la chambre à vide (56),
• avec une ouverture d'évacuation (50.3) disposée dans un fond de récipient (50.2) du récipient d'infuseur (50 ; 50^{∗}, 500) pour l'évacuation du produit alimentaire liquide (P) chauffé,
• avec une section tubulaire (52, 76) adjacente à l'ouverture d'évacuation (50.3) pour la redirection du produit alimentaire liquide (P) chauffé, laquelle est formée soit par un conduit d'évacuation (52) débouchant du récipient d'infuseur (50 ; 50^{∗}, 500) soit par un embout d'aspiration (76) de la pompe centrifuge (54),
• avec un espace de fluide de refroidissement côté fond de récipient (50.4) pour le refroidissement du produit alimentaire liquide (P) chauffé sollicitant le fond de récipient (50.2),
• avec un espace de fluide de refroidissement côté conduit d'évacuation (52.1) ou un espace de fluide de refroidissement côté embout d'aspiration (76.1) pour le refroidissement du produit alimentaire liquide (P) chauffé traversant la section tubulaire (52, 76),
**caractérisé en ce que**
- un boîtier de pompe (12) de la pompe centrifuge (54), constitué au moins d'un couvercle de boîtier (8) et d'une paroi arrière de boîtier (10), présente un espace de fluide de refroidissement côté couvercle de boîtier (8.1) pour le refroidissement du produit alimentaire liquide (P) chauffé transporté, et **en ce que**
- la pompe centrifuge (54), présentant un rotor (100) ouvert vers le couvercle de boîtier (8), est conçue de telle façon qu'une partie du débit volumétrique du produit alimentaire liquide (P) chauffé, transporté dans le rotor (100), permet d'effectuer au moins un rinçage planifié du boîtier de pompe (12) et du rotor (100) par le biais d'une fente de rotor arrière (s1) prévue entre une paroi arrière de boîtier (10) et le rotor (100), et par le biais d'une fente de rotor avant (s2) prévue entre le couvercle de boîtier (8) et le rotor (100), et dans lequel les débits volumiques des rinçages planifiés dépassent jusqu'à un multiple les flux de compensation inévitables à l'intérieur du boîtier de pompe (12), lesquels résultent d'une conception optimisée hydrauliquement de la pompe centrifuge (54), avec une fente de rotor arrière et avant minimale respective (s1^{∗}, s2^{∗}) garantissant la fonctionnalité mécanique de la pompe centrifuge (54).

11. Installation selon la revendication 10,
**caractérisée en ce que**
le boîtier de pompe (12) présente un espace de fluide de refroidissement côté paroi arrière de boîtier (10.1).

12. Installation selon la revendication 10 ou 11,
**caractérisée en ce que**
un premier rinçage (S1) par le biais de la fente de rotor arrière (s1) entre le rotor (100) et la paroi arrière de boîtier (10) est effectué sur le trajet par le biais d'au moins un perçage de rinçage (6) disposé dans le côté arrière du rotor (4).

13. Installation selon l'une des revendications 10 à 12,
**caractérisée en ce que**
un deuxième rinçage (S2) est effectué par le biais de la fente de rotor avant (s2) entre le couvercle de boîtier (8) et le rotor (100).

14. Installation selon l'une des revendications 10 à 13,
**caractérisée en ce que**
un troisième rinçage (S3) est effectué par des flux de compensation entre un côté pression et aspiration respectif d'une pale (2) du rotor (100) ouvert et par le biais de la fente de rotor avant (s2).

15. Installation selon l'une des revendications 11 à 14,
**caractérisée en ce que**
l'espace de fluide de refroidissement côté fond de récipient (50.4), l'espace de fluide de refroidissement côté conduit d'évacuation ou côté embout d'aspiration (52.1, 76.1), l'espace de fluide de refroidissement côté couvercle de boîtier (8.1) et l'espace de fluide de refroidissement côté paroi arrière de boîtier (10.1) sont sollicités avec du fluide de refroidissement séparément les unes des autres.

16. Installation selon l'une des revendications 11 à 14,
**caractérisée en ce que**
au moins deux espaces de refroidissement (50.4, 52.1, 76.1, 8.1, 10.1) sont montés ensemble en série.

17. Pompe centrifuge (54) pour le transport de produits alimentaires liquides (P) sensibles à la chaleur, avec une entrée (76), une sortie (94), un boîtier de pompe (12) formé au moins par un couvercle de boîtier (8) et une paroi arrière de boîtier (10), une chambre de pompe (98) formée dans le boîtier de pompe (12) et mise en liaison fluidique avec l'entrée (76) et la sortie (94), un rotor (100) avec des pales (2) reçu de façon rotative dans la chambre de pompe (98), un canal de pale (2.1) formé respectivement entre deux pales (2) adjacentes, lequel est ouvert vers le couvercle de boîtier (8) et fermé vers la paroi arrière de boîtier (10) par un côté arrière de rotor (4), une fente de rotor arrière (s1) prévue entre la paroi arrière de boîtier (10) et le rotor (100) et une fente de rotor avant (s2) prévue entre le couvercle de boîtier (8) et le rotor (100),
**caractérisée en ce que**
• la fente de rotor arrière et/ou avant (s1, s2) est/sont agrandie(s) jusqu'à un multiple respectivement par rapport à une fente de rotor arrière et avant minimale (s1^{∗}, s2^{∗}) correspondante garantissant la fonctionnalité mécanique de la pompe centrifuge (54), par réduction de la largeur du rotor (100) dans la région des fentes de rotor arrière et avant (s1, s2), et
• l'au moins un couvercle de boîtier (8) est pourvu d'un espace de fluide de refroidissement (8.1) apte à être traversé par un fluide de refroidissement.

18. Pompe centrifuge selon la revendication 17,
**caractérisée en ce que**
chaque canal de pale (2.1) est mis en liaison fluidique avec la fente de rotor arrière (s1) dans la région de son côté arrière de rotor (4) de délimitation, par le biais d'au moins un perçage de rinçage (6) traversant le côté arrière de rotor (4).

19. Pompe centrifuge selon la revendication 18,
**caractérisée en ce que**
l'emplacement géométrique pour la zone de pénétration respective du perçage de rinçage (6) avec le côté arrière de rotor (4), définissant également un diamètre de cercle (d), est déterminé
• approximativement par le milieu du canal de pale (2.1), par rapport à la distance de la pale (2) au niveau de la zone de pénétration, et
• approximativement par le milieu d'une longueur maximale de la veine fluide du canal de pale (2.1) entre l'entrée et la sortie de celui-ci.
